# EUROPEAN PATENT APPLICATION

(11) **EP 4 227 094 A1**
(43) Date of publication of application: **16.08.2023**
(21) Application number: 20956692.6
(22) Date of filing: 06.10.2020
(51) Int. Cl.: B33Y 50/00, B29C 64/386, G06F 30/10

(54) **DATA GENERATING METHOD, BUILD CONTRACTING METHOD, DATA GENERATING DEVICE, DISPLAY DEVICE, BUILDING METHOD, COMPUTER PROGRAM, AND RECORDING MEDIUM**

(71) Applicant: NIKON CORPORATION, Minato-ku Tokyo 108-6290 (JP)
(72) Inventor: SHIBAZAKI, Yuichi, Tokyo 108-6290 (JP)
(74) Representative: Hoffmann Eitle
(86) International application number: PCT/JP2020/037904
(87) International publication number: WO 2022/074744

(57) **Abstract**

A data generation method includes: displaying, on a display apparatus, an input screen operable by a user to set a value of a parameter defining a shape of an object and an output screen on which a three-dimensional model based on the parameter set by the user using the input screen; displaying, on a display screen of the display apparatus, a display for prompting the user to set the parameter again, when the three-dimensional model based on the parameter set by the user using the input screen has a shape that cannot be built by a build apparatus; and generating model data representing the three-dimensional model of the object based on the parameter set by the user again.

## Description

### Technical Field

The present invention relates to a technical field of a data generation method, a build contract method, a data generation apparatus, a display apparatus, a build method, a computer program and a recording medium for generating model data representing a three-dimensional model of an object, for example.

### Background Art

A Patent Literature 1 discloses a manufacturing method of a three-dimensional object including: receiving digital information of the three-dimensional object; and building the three-dimensional object based on the received digital information. The manufacturing method disclosed in the Patent Literature 1 requires receiving the digital information of the three-dimensional object from a customer. Thus, the manufacturing method disclosed in the Patent Literature 1 has a technical problem that it is impossible to assist the customer to easily generate the digital information of the three-dimensional object.

### Citation List

### Patent Literature

Patent Literature 1: US2009/271323A1

### Summary of Invention

A first aspect provide a data generation method of generating model data representing a three-dimensional model of an object that is additively built by a build apparatus, wherein the data generation method includes: displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; displaying, on the display screen of the display apparatus, a display for prompting the user to set the value of the parameter again, when the three-dimensional model based on the value of the parameter set by the user using the input screen has a shape that cannot be built by the build apparatus; and generating the model data based on the value of the parameter set by the user again.

A second aspect provides a data generation method of generating model data representing a three-dimensional model of a pipe that is an object additively built by a build apparatus, wherein the data generation method includes: displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and generating the model data based on the icon selected by the user, the user is allowed to select icons related to a plurality of cross-sections of the pipe.

A third aspect provides a data generation method of generating model data representing a three-dimensional model of an object that is additively built by a build apparatus, wherein the data generation method includes: displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; displaying, on the display screen of the display apparatus, a display for prompting the user to set the value of the parameter again, when a strength of the object based on the shape of the object represented by the value of the parameter set by the user does not satisfy a predetermined condition; and generating the model data based on the value of the parameter set by the user again.

A fourth aspect provides a data generation method of generating model data representing a three-dimensional model of an object that is additively built by a build apparatus, wherein the data generation method includes: displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; displaying, on the display screen of the display apparatus, a display for prompting the user to set the value of the parameter again, when a quality of the object based on the shape of the object represented by the value of the parameter set by the user does not satisfy a predetermined condition; and generating the model data based on the value of the parameter set by the user again.

A fifth aspect provides a data generation method of generating model data representing a three-dimensional model of a pipe that is an object additively built by a build apparatus, wherein the data generation method includes: displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and generating the model data based on the value of the parameter set by the user, the user is allowed to set the values of the parameters related to a plurality of cross-sections of the pipe.

A sixth aspect provides a data generation method of generating model data representing a three-dimensional model of a plate that is an object additively built by a build apparatus, wherein the data generation method includes: displaying a display screen on a display apparatus, the display screen includes an input screen and an output screen, the input screen is operable by a user to set a value of a parameter defining a shape of the plate, a three-dimensional model based on the value of the parameter set by the user using the input screen is displayable on the output screen; and generating the model data based on the value of the parameter set by the user, the user is allowed to set the values of the parameters for a plurality of points of the plate.

A seventh aspect provides a data generation method of generating model data representing a three-dimensional model of a plate that is an object additively built by a build apparatus, wherein the data generation method includes: displaying a display screen on a display apparatus, the display screen includes an input screen and an output screen, the input screen is used by a user to select an icon defining a shape of the plate, a three-dimensional model based on the icon selected by the user using the input screen is displayable on the output screen; and generating the model data based on the icon selected by the user, the user is allowed to select icons for a plurality of points of the plate.

An eighth aspect provides a data generation method of generating model data representing a three-dimensional model of an object, wherein the data generation method includes: controlling an input and output apparatus, the input and output apparatus includes an input unit and an output unit, the input unit is operable by a user to set information related to a shape, model information based on the information related to the shape set by the user using the input unit is displayable by the output unit; controlling the input and output apparatus to perform a process for prompting the user to set the information related to the shape again, when the information related to the shape set by the user does not satisfy a predetermined condition; and generating the model data based on the information related to the shape set by the user again, the predetermined condition includes at least one of a condition related to a build apparatus configured to additively build the object and a condition related to a build object built based on the information related to the shape.

A ninth aspect provides a data generation method of generating model data representing a three-dimensional model of an object, wherein the data generation method includes: controlling an input and output apparatus, the input and output apparatus includes an input unit and an output unit, the input unit is operable by a user to set information related to a shape, model information based on the information related to the shape set by the user using the input screen is displayable by the output unit; controlling the input and output apparatus to present, to the user, information related to a shape which the user is allowed to set; and generating the model data based on the information related to the shape set by the user, the information related to the shape which the user is allowed to set is presented based on at least one of a condition related to a build apparatus configured to additively build the object and a condition related to a build object built based on the information related to the shape.

A tenth aspect provides a data generation method of generating model data representing a three-dimensional model of a pipe that is an object additively built by a build apparatus, wherein the data generation method includes: displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and generating the model data based on the value of the parameter set by the user, when the user sets the value of the parameter defining a shape of a second cross-section of the pipe after setting the value of the parameter defining a shape of a first cross-section of the pipe, the output screen updates a display of the three-dimensional model related to at least a pipe shape between the first cross-section and the second cross-section.

An eleventh aspect provides a data generation method of generating model data representing a three-dimensional model of a pipe that is an object additively built by a build apparatus, wherein the data generation method includes: displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and generating the model data based on the icon selected by the user, when the user sets the icon defining a shape of a second cross-section of the pipe after setting the icon defining a shape of a first cross-section of the pipe, the output screen updates a display of the three-dimensional model related to at least a pipe shape between the first cross-section and the second cross-section.

A twelfth aspect provides a data generation method of generating model data representing a three-dimensional model of an object, wherein the data generation method includes: displaying a display screen on a display apparatus, the display screen includes an input screen and an output screen, the input screen is used by a user to select an icon defining a shape of the object, a three-dimensional model based on the icon selected by the user using the input screen is displayable on the output screen; and generating the model data based on the icon selected by the user, the user is allowed to select a plurality of icons.

A thirteenth aspect provides a build contract method of contracting to additively build an object, wherein the build contract method includes: displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; displaying, on the display apparatus, a display screen for prompting the user to set the value of the parameter again, when the three-dimensional model based on the value of the parameter set by the user using the input screen has a shape that cannot be built by the build apparatus; and additively building the object based on the value of the parameter set by the user again.

A fourteenth aspect provides a build contract method of contracting to additively build a pipe, wherein the build contract method includes: displaying a display screen on a display apparatus, the display screen includes an input screen and an output screen, the input screen is used by a user to select an icon defining a shape of the pipe, a three-dimensional model based on the icon selected by the user using the input screen is displayable on the output screen, the user is allowed to select icons related to a plurality of cross-sections of the pipe.

A fifteenth aspect provides a build contract method of contracting to additively build an object, wherein the build contract method includes: displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; and displaying, on the display apparatus, a display screen for prompting the user to set the value of the parameter again, when a strength of the object based on the shape of the object represented by the value of the parameter set by the user does not satisfy a predetermined condition.

A sixteenth aspect provides a build contract method of contracting to additively build an object, wherein the build contract method includes: displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; and displaying, on the display apparatus, a display screen for prompting the user to set the value of the parameter again, when a quality of the object based on the shape of the object represented by the value of the parameter set by the user does not satisfy a predetermined condition.

A seventeenth aspect provides a build contract method of contracting to additively build a pipe, wherein the build contract method includes: displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen, the user is allowed to set the values of the parameters related to a plurality of cross-sections of the pipe.

An eighteenth aspect provides a build contract method of contracting to additively build plate, wherein the build contract method includes: displaying a display screen on a display apparatus, the display screen includes an input screen and an output screen, the input screen is operable by a user to set a value of a parameter defining a shape of the plate, a three-dimensional model based on the value of the parameter set by the user using the input screen is displayable on the output screen, the user is allowed to set the values of the parameters for a plurality of points of the plate.

A nineteenth aspect provides a build contract method of contracting to additively build a plate, wherein the build contract method includes: displaying a display screen on a display apparatus, the display screen includes an input screen and an output screen, the input screen is used by a user to select an icon defining a shape of the plate, a three-dimensional model based on the icon selected by the user using the input screen is displayable on the output screen, the user is allowed to select icons for a plurality of points of the plate.

A twentieth aspect provides a build contract method of contracting to additively build an object, wherein the build contract method includes: controlling an input and output apparatus, the input and output apparatus includes an input unit and an output unit, the input unit is operable by a user to set information related to a shape, model information based on the information related to the shape set by the user using the input unit is displayable by the output unit; and controlling the input and output apparatus to perform a process for prompting the user to set the information related to the shape again, when the information related to the shape set by the user does not satisfy a predetermined condition, the predetermined condition includes at least one of a condition related to a build apparatus configured to additively build the object and a condition related to a build object built based on the information related to the shape.

A twenty-first aspect provides a build contract method of contracting to additively build an object, wherein the build contract method includes: controlling an input and output apparatus, the input and output apparatus includes an input unit and an output unit, the input unit is operable by a user to set information related to a shape, model information based on the information related to the shape set by the user using the input screen is displayable by the output unit; and controlling the input and output apparatus to present, to the user, information related to a shape which the user is allowed to set, the information related to the shape which the user is allowed to set is presented based on at least one of a condition related to a build apparatus configured to additively build the object and a condition related to a build object built based on the information related to the shape.

A twenty-second aspect provides a build contract method of contracting to additively build a pipe, wherein the build contract method includes: displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen, when the user sets the value of the parameter defining a shape of a second cross-section of the pipe after setting the value of the parameter defining a shape of a first cross-section of the pipe, the output screen updates a display of the three-dimensional model related to at least a pipe shape between the first cross-section and the second cross-section.

A twenty-third aspect provides a build contract method of contracting to additively build a pipe, wherein the build contract method includes: displaying a display screen on a display apparatus, the display screen includes an input screen and an output screen, the input screen is used by a user to select an icon defining a shape of the pipe, a three-dimensional model based on the icon selected by the user using the input screen is displayable on the output screen, when the user sets the icon defining a shape of a second cross-section of the pipe after setting the icon defining a shape of a first cross-section of the pipe, the output screen updates a display of the three-dimensional model related to at least a pipe shape between the first cross-section and the second cross-section.

A twenty-fourth aspect provides a build contract method of contracting to additively build an object, wherein the build contract method includes: displaying a display screen on a display apparatus, the display screen includes an input screen and an output screen, the input screen is used by a user to select an icon defining a shape of the object, a three-dimensional model based on the icon selected by the user using the input screen is displayable on the output screen, the user is allowed to select a plurality of icons.

A twenty-fifth aspect provides a build contract method of contracting to additively build an object, wherein the build contract method includes: generating display information for displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; generating display information for displaying, on the display apparatus, a display screen for prompting the user to set the value of the parameter again, when the three-dimensional model based on the value of the parameter set by the user using the input screen has a shape that cannot be built by the build apparatus; and generating model data representing a three-dimensional model of the object based on the value of the parameter set by the user again.

A twenty-sixth aspect provides a build contract method of contracting to additively build a pipe, wherein the build contract method includes: generating display information for displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and generating model data representing a three-dimensional model of the pipe based on the icon selected by the user, the user is allowed to select icons related to a plurality of cross-sections of the pipe.

A twenty-seventh aspect provides a build contract method of contracting to additively build an object, wherein the build contract method includes: generating display information for displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; generating display information for displaying, on the display apparatus, a display screen for prompting the user to set the value of the parameter again, when a strength of the object based on the shape of the object represented by the value of the parameter set by the user does not satisfy a predetermined condition; and generating model data representing a three-dimensional model of the object based on the value of the parameter set by the user again.

A twenty-eighth aspect provides a build contract method of contracting to additively build an object, wherein the build contract method includes: generating display information for displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; generating display information for displaying, on the display apparatus, a display screen for prompting the user to set the value of the parameter again, when a quality of the object based on the shape of the object represented by the value of the parameter set by the user does not satisfy a predetermined condition; and generating model data representing a three-dimensional model of the object based on the value of the parameter set by the user again.

A twenty-ninth aspect provides a build contract method of contracting to additively build a pipe, wherein the build contract method includes: generating display information for displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and generating model data representing a three-dimensional model of the pipe based on the value of the parameter selected by the user, the user is allowed to set the values of the parameters related to a plurality of cross-sections of the pipe.

A thirtieth aspect provides a build contract method of contracting to additively build a plate, wherein the build contract method includes: generating display information for displaying a display screen on a display apparatus, the display screen includes an input screen and an output screen, the input screen is operable by a user to set a value of a parameter defining a shape of the plate, a three-dimensional model based on the value of the parameter set by the user using the input screen is displayable on the output screen; and generating model data representing a three-dimensional model of the plate based on the value of the parameter selected by the user, the user is allowed to set the values of the parameters for a plurality of points of the plate.

A thirty-first aspect provides a build contract method of contracting to additively build a plate, wherein the build contract method includes: generating display information for displaying a display screen on a display apparatus, the display screen includes an input screen and an output screen, the input screen is used by a user to select an icon defining a shape of the plate, a three-dimensional model based on the icon selected by the user using the input screen is displayable on the output screen; and generating model data representing a three-dimensional model of the plate based on the icon selected by the user, the user is allowed to select icons for a plurality of points of the plate.

A thirty-second aspect provides a build contract method of contracting to additively build a pipe, wherein the build contract method includes: generating display information for displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and generating a display information for displaying, on the output screen, a three-dimensional model related to at least a pipe shape between a first cross-section and a second cross-section based on the value of the parameter defining a shape of the first cross-section of the pipe and the value of the parameter defining a shape of the second cross-section of the pipe which are set by the user.

A thirty-third aspect provides a build contract method of contracting to additively build a pipe, wherein the build contract method includes: generating display information for displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and generating a display information for displaying, on the output screen, a three-dimensional model related to at least a pipe shape between a first cross-section and a second cross-section based on the icon defining a shape of the first cross-section of the pipe and the icon defining a shape of the second cross-section of the pipe which are selected by the user.

A thirty-fourth aspect provides a data generation apparatus configured to generate model data representing a three-dimensional model of an object that is additively built by a build apparatus, wherein the data generation apparatus is configured to: generate a display screen, the display screen includes an input screen and an output screen, the input screen is operable by a user to set a value of a parameter defining a shape of the object, a three-dimensional model based on the value of the parameter set by the user using the input screen is displayable on the output screen; perform a process for prompting the user to set the value of the parameter again, when the three-dimensional model based on the value of the parameter set by the user using the input screen has a shape that cannot be built by the build apparatus; and generate the model data based on the value of the parameter set by the user again.

A thirty-fifth aspect provides a data generation apparatus configured to generate model data representing a three-dimensional model of a pipe that is an object additively built by a build apparatus, wherein the data generation apparatus is configured to: generate a display screen, the display screen includes an input screen and an output screen, the input screen is used by a user to select an icon defining a shape of the pipe, a three-dimensional model based on the icon selected by the user using the input screen is displayable on the output screen; and generate the model data based on the icon selected by the user, the user is allowed to select icons related to a plurality of cross-sections of the pipe.

A thirty-sixth aspect provides a data generation apparatus configured to generate model data representing a three-dimensional model of an object that is additively built by a build apparatus, wherein the data generation apparatus is configured to: generate a display screen, the display screen includes an input screen and an output screen, the input screen is operable by a user to set a value of a parameter defining a shape of the object, a three-dimensional model based on the value of the parameter set by the user using the input screen is displayable on the output screen; perform a process for prompting the user to set the value of the parameter again, when a strength of the object based on the shape of the object represented by the value of the parameter set by the user does not satisfy a predetermined condition; and generate the model data based on the value of the parameter set by the user again.

A thirty-seventh aspect provides a data generation apparatus configured to generate model data representing a three-dimensional model of an object that is additively built by a build apparatus, wherein the data generation apparatus is configured to: generate a display screen, the display screen includes an input screen and an output screen, the input screen is operable by a user to set a value of a parameter defining a shape of the object, a three-dimensional model based on the value of the parameter set by the user using the input screen is displayable on the output screen; perform a process for prompting the user to set the value of the parameter again, when a quality of the object based on the shape of the object represented by the value of the parameter set by the user does not satisfy a predetermined condition; and generate the model data based on the value of the parameter set by the user again.

A thirty-eighth aspect provides a data generation apparatus configured to generate model data representing a three-dimensional model of a pipe that is an object additively built by a build apparatus, wherein the data generation apparatus is configured to: generate a display screen, the display screen includes an input screen and an output screen, the input screen is operable by a user to set a value of a parameter defining a shape of the pipe, a three-dimensional model based on the value of the parameter set by the user using the input screen is displayable on the output screen; and generate the model data based on the value of the parameter set by the user, the user is allowed to set the values of the parameters related to a plurality of cross-sections of the pipe.

A thirty-ninth aspect provides a data generation apparatus configured to generate model data representing a three-dimensional model of a plate that is an object additively built by a build apparatus, wherein the data generation apparatus is configured to: generate a display screen, the display screen includes an input screen and an output screen, the input screen is operable by a user to set a value of a parameter defining a shape of the plate, a three-dimensional model based on the value of the parameter set by the user using the input screen is displayable on the output screen; and generate the model data based on the value of the parameter set by the user, the user is allowed to set the values of the parameters for a plurality of points of the plate.

A fortieth aspect provides a data generation apparatus configured to generate model data representing a three-dimensional model of a plate that is an object additively built by a build apparatus, wherein the data generation apparatus is configured to: generate a display screen, the display screen includes an input screen and an output screen, the input screen is used by a user to select an icon defining a shape of the plate, a three-dimensional model based on the icon selected by the user using the input screen is displayable on the output screen; and generate the model data based on the icon selected by the user, the user is allowed to select icons for a plurality of points of the plate.

A forty-first aspect provides a data generation apparatus configured to generate model data representing a three-dimensional model of an object, wherein the data generation apparatus is configured to: control an input and output apparatus, the input and output apparatus includes an input unit and an output unit, the input unit is operable by a user to set information related to a shape, model information based on the information related to the shape set by the user using the input unit is displayable by the output unit; control the input and output apparatus to perform a process for prompting the user to set the information related to the shape again, when the information related to the shape set by the user does not satisfy a predetermined condition; and generate the model data based on the information related to the shape set by the user again, the predetermined condition includes at least one of a condition related to a build apparatus configured to additively build the object and a condition related to a build object built based on the information related to the shape.

A forty-second aspect provides a data generation apparatus configured to generate model data representing a three-dimensional model of an object, wherein the data generation apparatus is configured to: control an input and output apparatus, the input and output apparatus includes an input unit and an output unit, the input unit is operable by a user to set information related to a shape, model information based on the information related to the shape set by the user using the input screen is displayable by the output unit; control the input and output apparatus to present, to the user, information related to a shape which the user is allowed to set; and generate the model data based on the information related to the shape set by the user, the information related to the shape which the user is allowed to set is presented based on at least one of a condition related to a build apparatus configured to additively build the object and a condition related to a build object built based on the information related to the shape.

A forty-third aspect provides a data generation apparatus configured to generate model data representing a three-dimensional model of a pipe that is an object additively built by a build apparatus, wherein the data generation apparatus is configured to: generate a display screen, the display screen includes an input screen and an output screen, the input screen is operable by a user to set a value of a parameter defining a shape of the pipe, a three-dimensional model based on the value of the parameter set by the user using the input screen is displayable on the output screen; and generate the model data based on the value of the parameter set by the user, when the user sets the value of the parameter defining a shape of a second cross-section of the pipe after setting the value of the parameter defining a shape of a first cross-section of the pipe, the output screen updates a display of the three-dimensional model related to at least a pipe shape between the first cross-section and the second cross-section.

A forty-fourth aspect provides a data generation apparatus configured to generate model data representing a three-dimensional model of a pipe that is an object additively built by a build apparatus, wherein the data generation apparatus is configured to: generate a display screen, the display screen includes an input screen and an output screen, the input screen is used by a user to select an icon defining a shape of the pipe, a three-dimensional model based on the icon selected by the user using the input screen is displayable on the output screen; and generate the model data based on the icon selected by the user, when the user sets the icon defining a shape of a second cross-section of the pipe after setting the icon defining a shape of a first cross-section of the pipe, the output screen updates a display of the three-dimensional model related to at least a pipe shape between the first cross-section and the second cross-section.

A forty-fifth aspect provides a data generation apparatus configured to generate model data representing a three-dimensional model of an object, wherein the data generation apparatus is configured to: generate a display screen, the display screen includes an input screen and an output screen, the input screen is used by a user to select an icon defining a shape of the object, a three-dimensional model based on the icon selected by the user using the input screen is displayable on the output screen; and generate the model data based on the icon selected by the user, the user is allowed to select a plurality of icons.

A forty-sixth aspect provides a display apparatus including: an obtaining unit configured to obtain information related to the display screen from the data generation apparatus provided by any one of the thirty-fourth aspect to the fortieth aspect and the forty-third aspect to the forty-fifth aspect described above; and display unit configured to display the display screen based on the information obtained by the obtaining unit.

A forty-seventh aspect provides a display apparatus including: an obtaining unit configured to obtain information related to the input unit and the output unit from the data generation apparatus provided by the forty-first aspect or the forty-second aspect described above; and display unit configured to display the display screen based on the information obtained by the obtaining unit.

A forty-eighth aspect provides a build method of building an object, wherein the build method includes: generating the model data by using the data generation method provided by any one of the first aspect to the twelfth aspect described above; and controlling a build apparatus to build the object based on the model data.

A forty-ninth aspect provides a build method of building an object, wherein the build method includes: generating the model data by using the data generation apparatus provided by the thirty-fourth aspect to the forty-fifth aspect described above; and controlling a build apparatus to build the object based on the model data.

A fiftieth aspect provides a computer program that allows a computer to execute the data generation method provided by any one of the first aspect to the twelfth aspect described above.

A fifty-first aspect provides a computer program that allows a computer to execute the build contract method provided by any one of thirteenth aspect to the thirty-third aspect described above.

A fifty-second aspect provides a computer program that allows a computer to execute the build method provided by the forty-eighth aspect or the forty-ninth aspect described above.

A fifty-third aspect provides a recording medium on which the computer program provided by the fiftieth aspect to the fifty-second aspect described above is recorded.

An operation and other advantage of the present invention will be described in a below-described example embodiment.

### Brief Description of Drawings

[FIG. 1] FIG. 1 is a block diagram that illustrates a configuration of a build system in a present example embodiment.
[FIG. 2] FIG. 2 is a cross-sectional view that illustrates a configuration of the build apparatus in the present example embodiment.
[FIG. 3] FIG. 3 is a system configuration diagram that illustrates a system configuration of the build apparatus in the present example embodiment.
[FIG. 4] FIG. 4 is a block diagram that illustrates a configuration of a data generation server in the present example embodiment.
[FIG. 5] FIG. 5 is a block diagram that illustrates a configuration of a terminal apparatus in the present example embodiment.
[FIG. 6] FIG. 6 is a flowchart that illustrates a flow of a process (namely, a process for building a three-dimensional structural object, and for example, a build contract process) performed by the build system.
[FIG. 7] FIG. 7 is a planar view that illustrates one example of a setting GUI.
[FIG. 8] FIG. 8 is a planar view that illustrates one example of an input screen for setting shape information related to a shape of a pipe.
[FIG. 9] FIG. 9 is a planar view that illustrates a wire frame model of the pipe.
[FIG. 10] FIG. 10 is a planar view that illustrates a surface model of the pipe associated with a plurality of points through which the pipe passes.
[FIG. 11] FIG. 11 is a planar view that illustrates one example of an input screen for setting shape information related to a shape of a plate.
[FIG. 12] FIG. 12 is a planar view that illustrates a solid model of the plate.
[FIG. 13] FIG. 13 is a planar view that illustrates a wire frame model of the plate.
[FIG. 14] FIG. 14 is a planar view that illustrates one example of the setting GUI including allowable parameter information.
[FIG. 15] FIG. 15 is a planar view that illustrates one example of the setting GUI including allowable icon information.
[FIG. 16] FIG. 16 is a planar view that illustrates one example of the setting GUI including the allowable icon information.
[FIG. 17] FIG. 17 is a planar view that illustrates one example of the setting GUI including the allowable icon information.
[FIG. 18] FIG. 18 is a planar view that illustrates one example of the setting GUI including non-allowable parameter information.
[FIG. 19] FIG. 19 is a planar view that illustrates one example of the setting GUI including non-allowable icon information.
[FIG. 20] FIG. 20 is a planar view that illustrates the setting GUI including a message window that prompts a terminal user to set a parameter again.
[FIG. 21] FIG. 21 is a planar view that illustrates the setting GUI including a message window that prompts the terminal user to select an icon again.
[FIG. 22] FIG. 22 is a planar view that illustrates the setting GUI in which the parameter that is not allowed to be set is inputted.

### Description of Example embodiments

Next, an example embodiment of a data generation method, a build contract method, a data generation apparatus, a display apparatus, a build method, a computer program and a recording medium will be described with reference to drawings. In the below-described description, the example embodiment of a data generation method, a build contract method, a data generation apparatus, a display apparatus, a build method, a computer program and a recording medium will be described by using a build system SYS.

### (1) Configuration of Build System SYS

Firstly, a configuration of the build system will be described.

### (1-1) Entire Configuration of Build System SYS

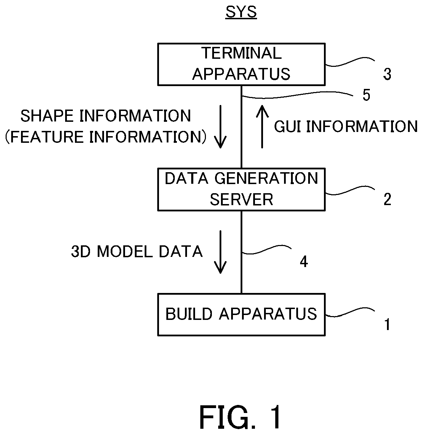

Firstly, with reference to FIG. 1, one example of an entire configuration of the build system SYS will be described. FIG. 1 is a block diagram that illustrates the entire configuration of the build system SYS.

The build system SYS includes a build apparatus 1 and a data generation server 2. The build apparatus 1 and the data generation server 2 are configured to communicate with each other through a communication network 4 that includes at least one of a wired communication network and a wireless communication network. The data generation server 2 is configured to communicate with a terminal apparatus 3 through a communication network 5 that includes at least one of a wired communication network and a wireless communication network. Note that the communication networks 4 and 5 may be separate communication networks or the same communication network. The terminal apparatus 3 may be an apparatus constitutes a part of the build system SYS. Namely, the build system SYS may include the terminal apparatus 3. Alternatively, the build system SYS may not include the terminal apparatus 3. In this case, any apparatus that is configured to communicate with the data generation server 3 of the build system SYS (for example, an information processing apparatus such as a computer of a below-described terminal user) may be used as the terminal apparatus 3.

The build apparatus 1 is an apparatus that is configured to build a three-dimensional structural object (namely, a three-dimensional object that has a magnitude (a size) in each of three-dimensional directions). Especially, in the present example embodiment, the build apparatus 1 builds the three-dimensional structural object by performing an additive processing. Namely, the build apparatus 1 additively builds the three-dimensional structural object.

The data generation server 2 is an apparatus that is configured to generate three-dimensional model data representing a three-dimensional model of the three-dimensional structural object to be additively built by the build apparatus 1. The data generation server 2 may be referred to as a data generating apparatus. The data generation server 2 transmits the generated three-dimensional model data to the build apparatus 1 through the communication network 4. The build apparatus 1 builds the three-dimensional structural object based on the three-dimensional model data transmitted from the data generation server 2.

The terminal apparatus 3 is an apparatus that is operable by a user to set (namely, designate) feature information related to a feature of the three-dimensional structural object to be additively built by the build apparatus 1. In the below-describe description, the user who is allowed to operate the terminal apparatus 3 is referred to as the "terminal user". The terminal user may be typically a person who wants to build the three-dimensional structural object by using the build apparatus 1. In the present example embodiment, an example in which the terminal apparatus 3 is an apparatus that is operable by the terminal user to set shape information related to a shape of the three-dimensional structural object to be additively built by the build apparatus 1 will be described as an example of the feature information.

The terminal apparatus 3 transmits the shape information set by the terminal user to the data generation server 2 through the communication network 5. The data generation server 2 generates the three-dimensional model data based on the shape information transmitted from the terminal apparatus 3. Namely, the data generation server 2 generates the three-dimensional model data representing the three-dimensional model of the three-dimensional structural object having the shape that is defined by the shape information set by the terminal user. As a result, the build apparatus 1 builds the three-dimensional structural object having the shape that is defined by the shape information set by the terminal user.

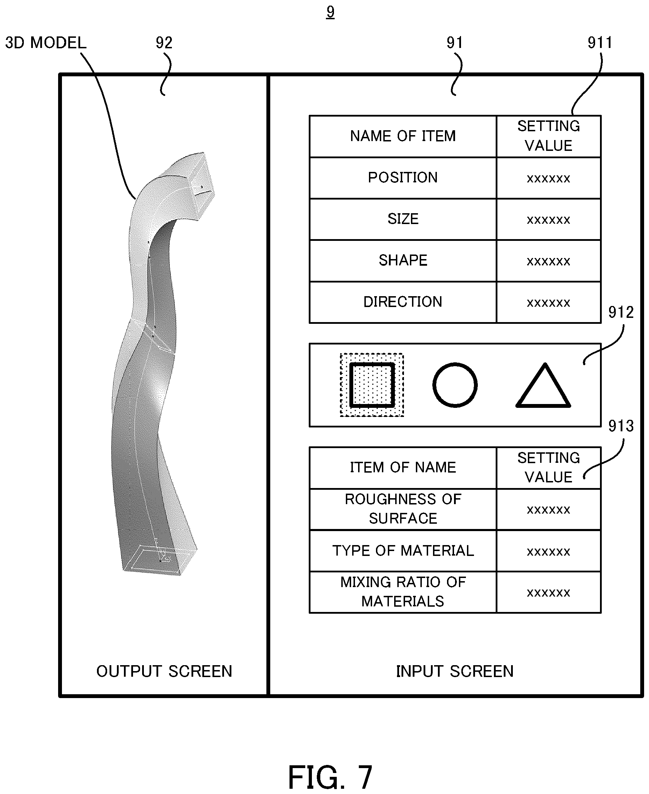

The terminal apparatus 3 may display a setting GUI (Graphical User Interface) 9 (see FIG. 7 and so on) that includes an input screen 22 that is operable by the user to set the shape information, as described in detail later. In this case, the data generation server 2 transmits GUI information related to the setting GUI 9 to the terminal apparatus 3 through the communication network 5. The terminal apparatus 3 displays the setting GUI 9 based on the GUI information. The terminal user sets the shape information by using the setting GUI 9 displayed by the terminal apparatus 3.

The terminal user may be the same as or different from a user who is allowed to operate the data generation server 2 (hereinafter, it is referred to as a "server user"). The terminal user may be the same as or different from a user who is allowed to operate the build apparatus 1 (hereinafter, it is referred to as a "build user"). When the terminal user is different from the build user, the build system SYS may be regarded to be equivalent to a build contract system in which the terminal user is a consignor who requires the build user to build the three-dimensional structural object and the build user is a consignee who is required to build the three-dimensional structural object required to be built by the terminal user. Namely, a following build process may be equivalent to a build contract process (a build contract method).

### (1-2) Configuration of Build Apparatus 1

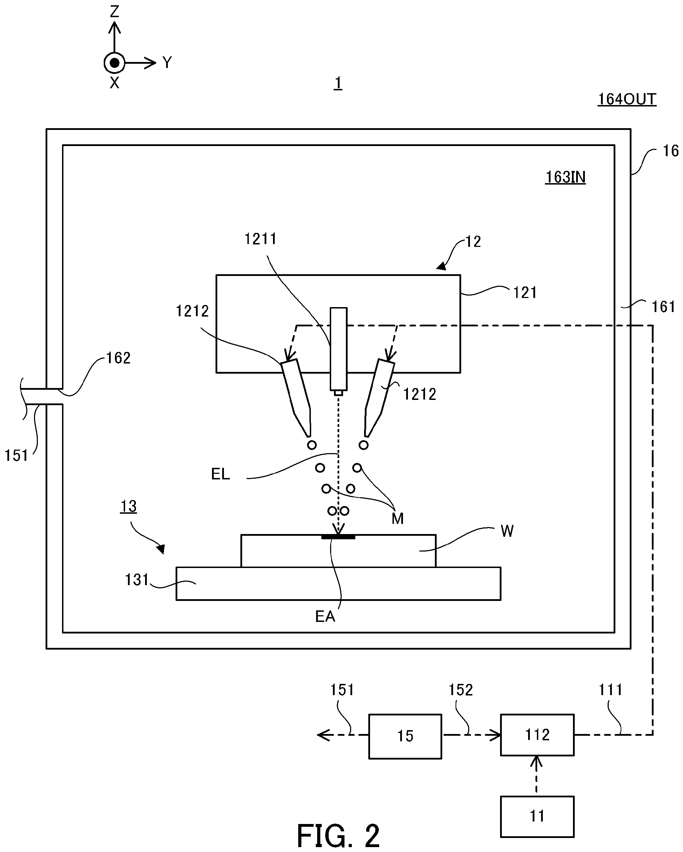

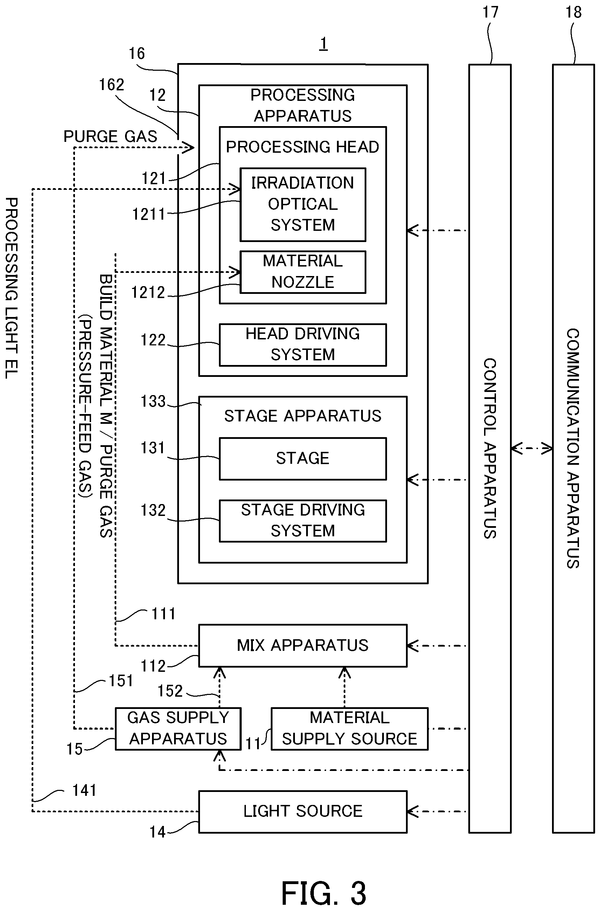

Next, with reference to FIG. 2 and FIG. 3, a configuration of the build apparatus 1 will be described. Firstly, with reference to FIG. 2 and FIG. 3, the configuration of the build apparatus 1 in the present example embodiment will be described. FIG. 2 is a cross-sectional view that illustrates one example of the configuration of the build apparatus 1 in the present example embodiment. FIG. 3 is a system configuration diagram that illustrates one example of a system configuration of the build apparatus 1 in the present example embodiment.

In the below-described description, a positional relationship of various components included in the build apparatus 1 will be described by using a build coordinate system corresponding to an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially a vertical direction or a gravity direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be the gravity direction. Moreover, an XY plane may be a horizontal direction.

The build apparatus 1 is configured to perform a build operation for forming the three-dimensional structural object. The build apparatus 1 is configured to form the three-dimensional structural object on a workpiece W that is a base member for forming the three-dimensional structural object. When the workpiece W is a below-described stage 131, the build apparatus 1 is configured to form the three-dimensional structural object on the stage 131. When the workpiece W is an existing object placed on the stage 131 (alternatively, placed on the stage 131), the build apparatus 1 may be configured to form the three-dimensional structural object on the existing object. In this case, the build apparatus 1 may form the three-dimensional structural object that is integrated with the existing object. An operation for forming the three-dimensional structural object that is integrated with the existing object may be regarded to be equivalent to an operation for adding a new structural object to the existing object. Note that the existing structural object may be an item that needs to be repaired having a missing part, for example. The build apparatus 1 may form the three-dimensional structural object on the item that needs to be repaired to fill in the missing part of the item that needs to be repaired. Alternatively, the build apparatus 1 may form the three-dimensional structural object that is separable from the existing object. Note that FIG. 2 illustrates an example in which the workpiece W is the existing object held by the stage 131. Moreover, in the below-described description, the example in which the workpiece W is the existing object held by the stage 131 will be described.

In the present example embodiment, an example in which the build apparatus 1 build the three-dimensional structural object by performing the additive processing (the additive building) based on a Laser Metal Deposition (LMD). In this case, it can be said that the build apparatus 1 is a 3D printer that forms an object by using an Additive layer manufacturing technique. Note that the Additive layer manufacturing technique may be referred to as a Rapid Prototyping, a Rapid Manufacturing or an Additive Manufacturing. The Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

The build apparatus 1 forms the three-dimensional structural object by processing a build material M with a processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery materials. However, the build materials M may not be the powdery materials. For example, a wired-like build material or a gas-like build material may be used as the build material M, for example.

In order to perform the build operation, the build apparatus 1 includes a material supply source 11, a processing apparatus 12, a stage apparatus 13, a light source 14, a gas supply apparatus 15, a housing 16, a control apparatus 17, and a communication apparatus 18, as illustrated in FIG. 2 and FIG. 3. At least a part of each of the processing apparatus 12 and the stage apparatus 13 may be contained in a chamber space 163IN in the housing 16.

The material supply source 11 is configured to supply the build materials M to the processing apparatus 12. The material supply source 11 supplies, to the processing apparatus 12, the build materials M the amount of which is necessary for forming the three-dimensional structural object per unit time by supplying the build materials M the amount of which is based on the necessary amount.

The processing apparatus 12 forms the three-dimensional structural object by processing the build materials M supplied from the material supply source 11. In order to form the three-dimensional structural object, the processing apparatus 12 include a processing head 121 and a head driving system 122. Furthermore, the processing head 121 includes an irradiation optical system 1211 that is configured to emit the processing light EL and a material nozzle 1212 that is configured to supply the build materials M. The processing head 121 and the head driving system 122 are contained in the chamber space 163IN. However, at least a part of the processing head 121 and the head driving system 122 may be disposed in an external space 164OUT that is a space outside the housing 16. Note that the external space 164OUT may be a space into which the build user is allowed to enter.

The head driving system 122 is configured to move (namely, displace) the processing head 121. The head driving system 122 moves the processing head 121 along at least one of the X-axis, the Y-axis, the Z-axis, the θX direction, the θY direction and the θZ direction, for example. When the head driving system 122 moves the processing head 121, a relative position between the processing head 121 and the stage 131 (furthermore, the workpiece W placed on the stage 131) changes.

The build materials M supplied from the material nozzle 1212 are irradiated with the processing light EL emitted from the irradiation optical system 1211. As a result, the build materials M are molten. Namely, a melt pool including the molten build materials M is formed. When the melt pool is not irradiated with the processing light EL due to the movement of the processing head 121, the build materials M molten in the melt pool are solidified. Namely, a build object corresponding to a deposition of the solidified build materials M is formed. The build apparatus 1 repeats a series of the build process including the formation of the melt pool by the irradiation with the processing light EL and the solidification of the molten build materials M while relatively moving the processing head 121 along at least one of the X-axis direction and the Y-axis direction. As a result, a structural layer that is an aggregation of the build object formed in a pattern based on a moving trajectory of the melt pool is formed. The build apparatus 1 forms a plurality of structural layers in order so that the plurality of structural layers are laminated. As a result, the three-dimensional structural object that is an aggregation of the plurality of structural layers is formed.

The stage apparatus 13 includes the stage 131. The stage 131 is contained in the chamber space 163IN. The workpiece W may be placed on the stage 131. The stage 131 may be configured to hold the workpiece W placed on the stage 131. In this case, the stage 131 may include a mechanical chuck, an electro-static chuck, a vacuum chuck and the like in order to hold the workpiece W. Alternatively, the stage 131 may not be configured to hold the workpiece W placed on the stage 131. In this case, the workpiece W may be placed on the stage 131 without clamp.

The stage driving system 132 is configured to move (namely, displace) the stage 131. The stage driving system 132 moves the stage 131 along at least one of the X-axis, the Y-axis, the Z-axis, the θX direction, the θY direction and the θZ direction. When the stage driving system 132 moves the stage 131, a relative position between the processing head 121 and the stage 131 (furthermore, the workpiece W placed on the stage 131) changes.

The light source 14 is configured to emit at least one of an infrared light, a visible light and an ultraviolet light as the processing light EL, for example. However, other type of light may be used as the processing light EL. The processing light EL may include a plurality of pulsed lights (namely, a plurality of pulsed beams). The processing light EL may include a Continuous Wave (CW). The processing light EL may be a laser light. In this case, the light source 14 may include semiconductor laser such as a laser light source (for example, a Laser Diode (LD)). The laser light source may include at least one of a fiber laser, a CO₂ laser, a YAG laser, an Excimer laser and the like. However, the processing light EL may not be the laser light. The light source 14 may include any light source (for example, at least one of a LED (Light Emitting Diode), a discharge lamp and the like). The irradiation optical system 1211 is optically connected to the light source 14 through a light transmitting member 141 including at least one of an optical fiber, a light pipe and the like. The irradiation optical system 1211 emits the processing light EL transmitted from the light source 14 through the light transmitting member 141.

The gas supply apparatus 15 is a supply source of purge gas for purging the chamber space 163IN. The purge gas includes inert gas. At least one of Nitrogen gas and Argon gas is one example of the inert gas. The gas supply apparatus 15 is connected to the chamber space 163IN through a supply port 162 formed at a wall member 161 of the housing 16 and a supply pipe 151 that connects the gas supply apparatus 15 and the supply port 162. The gas supply apparatus 15 supplies the purge gas to the chamber space 163IN through the supply pipe 151 and the supply port 162. As a result, the chamber space 163IN is a space that is purged by the purge gas. The purge gas supplied to the chamber space 163IN may be discharged from a non-illustrated discharge port formed at the wall member 161. Note that the gas supply apparatus 15 may be a tank that stores the inert gas. When the purge gas is the Nitrogen gas, the gas supply apparatus 15 may be a Nitrogen gas generation apparatus that generates the Nitrogen gas by using air as material.

The gas supply apparatus 15 may supply the purge gas to a mix apparatus 112 to which the build materials M are supplied from the material supply source 11, in addition to the chamber space 163IN. Specifically, the gas supply apparatus 15 may be connected to the mix apparatus 112 through a supply pipe 152 that connects the gas supply apparatus 15 and the mix apparatus 112. As a result, the gas supply apparatus 15 supplies the purge gas to the mix apparatus 112 through the supply pipe 152. In this case, the build materials M from the material supply source 11 may be supplied (specifically, pressure-fed) to the material nozzle 1212 through the supply pipe 111 by the purge gas supplied from the gas supply apparatus 15 through the supply pipe 152. In this case, the material nozzle 1212 supplies, from a material supply port, the build materials M together with the purge gas for pressure-feeding the build materials M.

The housing 16 is a housing apparatus that is configured to contain at least a part of each of at least the processing apparatus 12 and the stage apparatus 13 in the chamber space 163IN that is an internal space of the housing 16. The housing 16 includes the wall member 161 that defines the chamber space 163IN. The wall member 161 is a member that separates the chamber space 163IN from the external space 164OUT at the outside of the housing 16. In this case, a space surrounded by the wall member 161 is the chamber space 163IN. Note that an openable and closable door may be disposed at the wall member 161. The door may be opened when the workpiece W is to be placed on the stage 131. The door may be opened when the workpiece W and / or the three-dimensional structural object is unloaded from the stage 131. The door may be closed during the build operation is performed. Note that an observation window (not illustrated) for visually observing the chamber space 163IN from the external space 164OUT of the housing 16 may be disposed at the wall member 61.

The control apparatus 17 is configured to control an operation of the build apparatus 1. The control apparatus 17 may include an arithmetic apparatus and a storage apparatus. The arithmetic apparatus may include at least one of a CPU (Central Processing Unit) and a GPU (Graphic Processing Unit), for example. The storage apparatus may include a memory. The control apparatus 17 serves as an apparatus for controlling the operation of the build apparatus 1 by means of the arithmetic apparatus executing a computer program. The computer program is a computer program that allows the arithmetic apparatus to execute (namely, to perform) a below-described operation that should be executed by the control apparatus 17. Namely, the computer program is a computer program that allows the control apparatus 17 to function so as to make the build apparatus 1 execute the below-described operation. The computer program executed by the arithmetic apparatus may be recorded in the storage apparatus (namely, a recording medium) of the control apparatus 17, or may be recorded in any recording medium (for example, a hard disk or a semiconductor memory) that is built in the control apparatus 17 or that is attachable to the control apparatus 17. Alternatively, the arithmetic apparatus may download the computer program that should be executed from an apparatus disposed at the outside of the control apparatus 17 through the communication apparatus 18.

The control apparatus 17 may control the operation of the build apparatus 1 to build the three-dimensional structural object (namely, the three-dimensional structural object having a shape set by the terminal user) based on the three-dimensional model data transmitted from the data generation server 2. For example, the control apparatus 17 may generate build control information that specifies a detail of the operation of the build apparatus 1 based on the three-dimensional model data. Specifically, the control apparatus 17 may generate, based on the three-dimensional model data, the build control information that specifies the detail of the operation of the build apparatus 1 for building the three-dimensional structural object represented by the three-dimensional model data (namely, the three-dimensional structural object having a shape defined by the shape information set by the terminal user). Then, the control apparatus 17 may control the operation of the build apparatus 1 to build the three-dimensional structural object (namely, the three-dimensional structural object having the shape set by the terminal user) based on the build control information.

The control apparatus 17 may not be disposed in the build apparatus 1. For example, the control apparatus 17 may be disposed at the outside of the build apparatus 1 as a server or the like. For example, the control apparatus 17 may be integrated with the data generation server 2. In this case, the control apparatus 17 may be connected to the build apparatus 1 through a wired and / or wireless network (for example, the communication network 4, alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 17 and the build apparatus 1 may be configured to transmit and receive various information through the communication network 4 or the like. Moreover, the control apparatus 17 may be configured to transmit information such as a command and a control parameter to the build apparatus 1 through the communication network 4 or the like. The communication apparatus 18 of the build apparatus 1 may serve as a reception apparatus that is configured to receive the information such as the command and the control parameter from the control apparatus 17 through the communication network 4 or the like. The communication apparatus 18 of the build apparatus 1 may serve as a transmission apparatus that is configured to transmit the information such as the command and the control parameter to the control apparatus 17 through the communication network 4 or the like. Alternatively, a first control apparatus that is configured to perform a part of the arithmetic processing performed by the control apparatus 17 may be disposed in the build apparatus 1 and a second control apparatus that is configured to perform another part of the arithmetic processing performed by the control apparatus 17 may be disposed at an outside of the build apparatus 1.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 17 may include. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 17 by means of the control apparatus 17 (namely, a computer) executing the computer program, may be realized by a hardware such as a predetermined gate array (a FPGA, an ASIC) of the control apparatus 17, or may be realized in a form in which the logical process block and a partial hardware module that realizes a partial element of the hardware are combined.

The communication apparatus 18 is configured to communicate with the data generation server 2 through the communication network 4. In the present example embodiment, the communication apparatus 18 is configured to receive the three-dimensional model data generated by the data generation server 2 from the data generation server 2.

### (1-3) Configuration of Data Generation Server 2

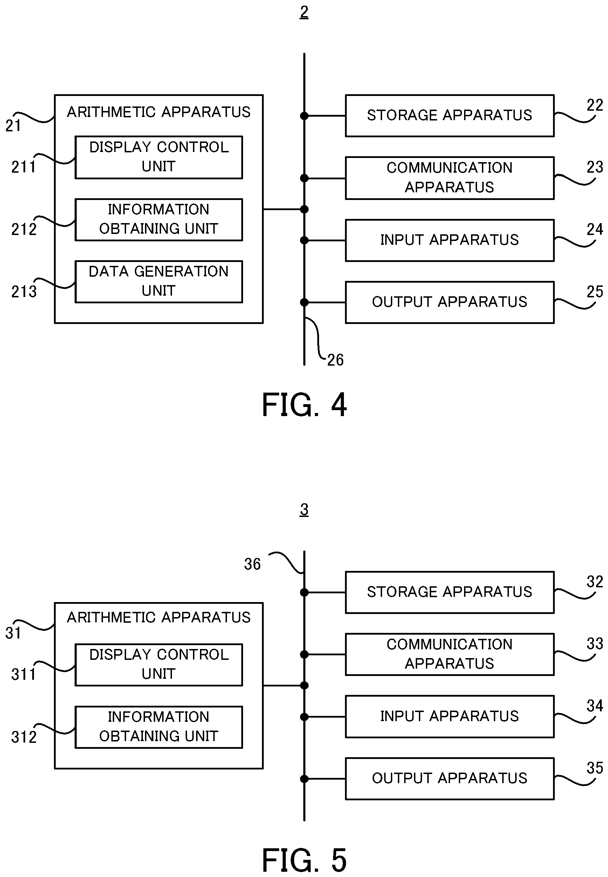

Next, with reference to FIG. 4, a configuration of the data generation server 2 will be described. FIG. 4 is a block diagram that illustrates the configuration of the data generation server 2.

As illustrated in FIG. 4, the data generation server 2 includes an arithmetic apparatus 21, a storage apparatus 22, and a communication apparatus 23. Furthermore, the data generation server 2 may include an input apparatus 24 and an output apparatus 25. However, the data generation server 2 may not include at least one of the input apparatus 24 and the output apparatus 25. The arithmetic apparatus 21, the storage apparatus 22, the communication apparatus 23, the input apparatus 24, and the output apparatus 25 may be connected through a data bus 26.

Note that the data generation server 2 and the terminal apparatus 3 may be an integrated apparatus (or an integrated system). At least two of the build apparatus 1, the data generation server 2, and the terminal apparatus 3 may be an integrated apparatus (or an integrated system). Here, the state in which "an apparatus X and an apparatus Y are the integrated apparatus" may include a state in which "the apparatus X and the apparatus Y are contained in the same housing and constitute an integrated apparatus". The state in which "the apparatus X and the apparatus Y are the integrated apparatus" may include a state in which "the apparatus X and the apparatus Y are contained in separate housings and constitute the integrated apparatus.

The arithmetic apparatus 21 may include at least one of a CPU and a GPU, for example. The arithmetic apparatus 21 reads a computer program. For example, the arithmetic apparatus 21 may read the computer program recorded in the storage apparatus 22. For example, the arithmetic apparatus 21 may read the computer program recorded in a non-transitory computer-readable recording medium by using a non-illustrated recording medium reading apparatus. The arithmetic apparatus 21 may obtain (namely, download or read) the computer program from a non-illustrated apparatus located outside the data generation server 2 through the communication apparatus 23. The arithmetic apparatus 21 executes the read computer program. As a result, a logical functional block for performing an operation that should be performed by the data generation server 2 (for example, an operation for generating the three-dimensional model data) is implemented in the arithmetic apparatus 21. In other words, the arithmetic apparatus 21 is configured to serve as a controller for implementing the logical functional block for performing the operation that should be performed by the data generation server 2.

FIG. 4 illustrates one example of the logical functional block that is implemented in the arithmetic apparatus 21 to generate the three-dimensional model data. As illustrated in FIG. 4, a display control unit 211, an information obtaining unit 212, and a data generation unit 213 are implemented in the arithmetic apparatus 21. The display control unit 211 generates GUI information for displaying the setting GUI 9. The information obtaining unit 212 obtains the shape information, which is set by the terminal user using the setting GUI, from the terminal apparatus 3 through the communication apparatus 23. The data generation unit 213 generates the three-dimensional model data representing the three-dimensional model of the three-dimensional structural object having a shape defined by the shape information set by the terminal user.

The storage apparatus 22 is configured to store desired data. For example, the storage apparatus 22 may temporarily store the computer program that is executed by the arithmetic apparatus 21. The storage apparatus 22 may temporarily store data temporarily used by the arithmetic apparatus 21 when the arithmetic apparatus 21 executes the computer program. The storage apparatus 22 may store data stored for a long term by the data generation server 2. The storage apparatus 22 may include at least one of a RAM (Random Access Memory), a ROM (Read Only Memory), a hard disk apparatus, a magneto-optical disc, a SSD (Solid State Drive) and a disk array apparatus. Namely, the storage apparatus 22 may include a non-transitory recording medium.

The communication apparatus 23 is configured to communicate with the build apparatus 1 through the communication network 4. In the present example embodiment, the communication apparatus 23 is configured to transmit the three-dimensional model data generated by the data generation unit 213 to the build apparatus 1. Furthermore, the communication apparatus 23 is configured to communicate with the terminal apparatus 3 through the communication network 5. In the present example embodiment, the communication apparatus 23 is configured to transmit the GUI information related to the setting GUI 9 generated by the display control unit 211 to the terminal apparatus 3, and to receive the shape information set by the terminal user using the setting GUI 9 from the terminal apparatus 3.

The input apparatus 24 is an apparatus that is configured to receive an input of information from an outside of the data generation server 2 to the data generation server 2. For example, the input apparatus 24 may include an operating apparatus (for example, at least one of a keyboard, a mouse, and a touch panel) that is operable by the server user. For example, the input apparatus 24 may include a reading apparatus that is configured to read information recorded as data on a recording medium that is attachable to the data generation server 2.

The output apparatus 25 is an apparatus that outputs information to the outside of the data generation server 2. For example, the output apparatus 25 may output the information as an image. Namely, the output apparatus 25 may include a display apparatus (a so-called display) that is configured to display an image indicating the information to be output. For example, the output apparatus 25 may output the information as audio. Namely, the output apparatus 25 may include an audio apparatus (so-called a speaker) that is configured output the audio. For example, the output apparatus 25 may output the information on a paper. Namely, the output apparatus 25 may include a printing apparatus (so-called a printer) that is configured to print desired information on the paper.

### (1-4) Configuration of Terminal Apparatus 4

Next, with reference to FIG. 5, a configuration of the terminal apparatus 3 will be described. FIG. 5 is a block diagram that illustrates the configuration of the terminal apparatus 3.

As illustrated in FIG. 5, the terminal apparatus 3 includes an arithmetic apparatus 31, a storage apparatus 32, a communication apparatus 33, an input apparatus 34, and a display apparatus 35. The arithmetic apparatus 31, the storage apparatus 32, the communication apparatus 33, the input apparatus 34, and the display apparatus 35 may be connected through a data bus 36. Note that the terminal apparatus 3 may not include the storage apparatus 32. In this case, the storage apparatus 22 of the data generation server 2 may be used as the storage apparatus 32.

The arithmetic apparatus 31 may include at least one of a CPU and a GPU, for example. The arithmetic apparatus 31 reads a computer program. For example, the arithmetic apparatus 31 may read the computer program recorded in the storage apparatus 32. For example, the arithmetic apparatus 31 may read the computer program recorded in a non-transitory computer-readable recording medium by using a non-illustrated recording medium reading apparatus. The arithmetic apparatus 31 may obtain (namely, download or read) the computer program from a non-illustrated apparatus located outside the terminal apparatus 3 through the communication apparatus 33. The arithmetic apparatus 31 executes the read computer program. As a result, a logical functional block for performing an operation that should be performed by the terminal apparatus 3 is implemented in the arithmetic apparatus 31. In other words, the arithmetic apparatus 31 is configured to serve as a controller for implementing the logical functional block for performing the operation that should be performed by the terminal apparatus 3.

FIG. 5 illustrates one example of the logical functional block that is implemented in the arithmetic apparatus 31. As illustrated in FIG. 5, a display control unit 311 and an information obtaining unit 312 are implemented in the arithmetic apparatus 31. The display control unit 311 controls the display apparatus 35 to display the setting GUI 9 based on the GUI information transmitted from the data generation server 2. The information obtaining unit 312 obtains the shape information set by the terminal user using the setting GUI 9.

The storage apparatus 32 is configured to store desired data. For example, the storage apparatus 32 may temporarily store the computer program that is executed by the arithmetic apparatus 31. The storage apparatus 32 may temporarily store data temporarily used by the arithmetic apparatus 31 when the arithmetic apparatus 31 executes the computer program. The storage apparatus 32 may store data stored for a long term by the terminal apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with the data generation server 2 through the communication network 5. In the present example embodiment, the communication apparatus 33 is configured to receive (namely, obtain) the GUI information related to the setting GUI 9 from the data generation server 2, and to transmit the shape information set by the terminal user using the setting GUI (namely, the shape information obtained by the information obtaining unit 312) to the data generation server 2.

The input apparatus 34 is an apparatus that is configured to receive an input of information from an outside of the terminal apparatus 3 to the terminal apparatus 3. For example, the input apparatus 34 may include an operating apparatus (for example, at least one of a keyboard, a mouse, and a touch panel) that is operable by the server user. For example, the input apparatus 34 may include a reading apparatus that is configured to read information recorded as data on a recording medium that is attachable to the terminal apparatus 3.

The display apparatus 35 is an apparatus that is configured to output information as an image. Namely, the display apparatus 35 is an apparatus that is configured to display the image indicating the information to be output. In the present example embodiment, the display apparatus 35 displays the setting GUI 9. The terminal user sets the shape information by using the setting GUI 9 displayed by the display apparatus 35. Namely, the terminal user sets the shape information by performing, through the setting GUI 9 displayed by the display apparatus 35, an operation for setting the shape information by using the input apparatus 34.

When the display apparatus 35 is configured to serve as an input apparatus (for example, the display apparatus 35 includes a touch panel), the display apparatus 35 may be referred to as an input apparatus. In this case, the terminal apparatus 3 may not include the input apparatus 34. The terminal user may operate the display apparatus 35 as the input apparatus 34. The terminal user may operate the input apparatus 34 while operating the display apparatus 35. Namely, the terminal user may use both of a function of inputting the information using the display apparatus 35 and a function of inputting the information using the input apparatus 34.

### (2) Process performed by Build System SYS

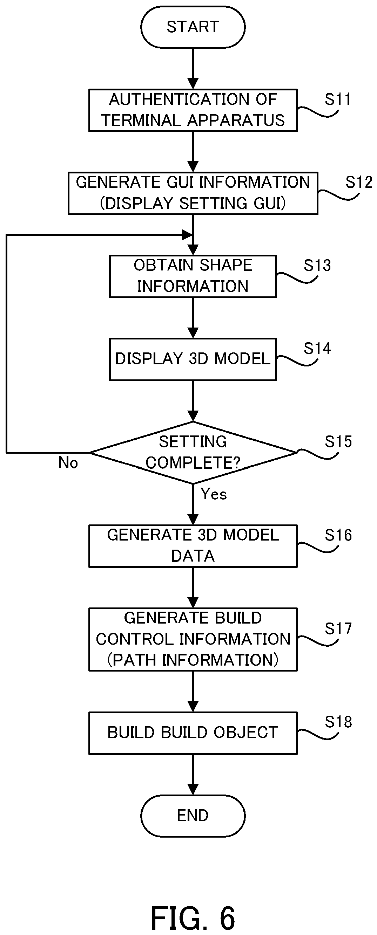

Next, with reference to FIG. 6, the process performed by the build system SYS (namely, a process for building the three-dimensional structural object, and for example, the build contract process) will be explained. FIG. 6 is a flowchart that illustrates a flow of the process performed by the build system SYS.

As illustrated in FIG. 6, when the process (for example, the build contract process) is started in the build system SYS, the data generation server 2 performs an authentication operation for authenticating the terminal apparatus 3 (a step S11). The data generation server 2 may perform the authentication operation by using a desired authentication method. For example, the data generation server 2 may perform the authentication operation by using an authentication method based on ID information and password information. In this case, for example, the terminal user may use the input apparatus 34 of the terminal apparatus 3 to input the ID information to identify the terminal user and a password unique to the terminal user. The communication apparatus 33 of the terminal apparatus 3 may transmit the ID information and the password inputted by the terminal user to the data generation server 2 through the communication network 5. The data generation server 2 may perform the authentication operation for authenticating the terminal apparatus 3 by using the ID information and the password transmitted from the terminal apparatus 3. Alternatively, for example, the data generation server 2 may perform the authentication operation by using another authentication method different from the authentication method based on the ID information and the password information. At least one of an authentication method using a token and an authentication method using biometric information of the terminal user is one example of another authentication method.

After the authentication operation is completed (namely, after the data generation server 2 confirms that the terminal apparatus 3 is authorized to access the data generation server 2), the display control unit 211 of the data generation server 2 generates the GUI information (display information) to display the setting GUI 9 on the display apparatus 35 of the terminal apparatus 3 (a step S12). Namely, the display control unit 211 provides the setting GUI 9 (display contents related to the setting GUI 9) to the terminal user. Then, the display control unit 211 transmits the generated GUI information to the terminal apparatus 3 by using the communication apparatus 23. The display apparatus 35 of the terminal apparatus 3 displays the setting GUI 9 based on the GUI information transmitted from the data generation server 2 (the step S12).

The display control unit 211 may generate the GUI information including information (for example, pixel information) related to a display screen constituting the setting GUI 9. In this case, the arithmetic apparatus 31 of the terminal apparatus 3 may control the display apparatus 35 to display the setting GUI 9 constituted by the display screen indicated by the GUI information. Alternatively, the display control unit 211 may generate the GUI information including information for controlling the display apparatus 35 of the terminal apparatus 3 to display the setting GUI 9. In this case, the display apparatus 35 of the terminal apparatus 3 may display the setting GUI 9 indicated by the GUI information under the control of the data generation server 2, independent of the control by the arithmetic apparatus 31. The display control unit 211 may control the display apparatus 35 to display the setting GUI 9.

An example of the setting GUI 9 is illustrated in FIG. 7. As illustrated in FIG. 7, the setting GUI 9 may include an input screen 91 and an output screen 92. Namely, the setting GUI 9 may constitute a display screen including the input screen 91 and the output screen 92.

The input screen 91 is a screen (in other words, an input part) including a GUI that is operable by the terminal user to set (designate, the same is applied to the below-described description) the shape information related to the shape of the three-dimensional structural object. The terminal user may operate the input screen 91 by using the input apparatus 34. Namely, the terminal user may perform the operation to set the shape information on the input screen 91 by using the input apparatus 34. As a result, the information obtaining unit 312 of the terminal apparatus 3 obtains the shape information set by the terminal user using the setting GUI 9 (a step S13 in FIG. 6). Then, the information obtaining unit 312 transmits the shape information set by the terminal user to the data generation server 2 through the communication network 5 by using the communication apparatus 33 of the terminal apparatus 3. As a result, the communication apparatus 23 of the data generation server 2 receives (namely, obtains) the shape information transmitted from the terminal apparatus 3 (step S13 in FIG. 6).

In order to set the shape information, the terminal user may use the input screen 91 to set (the same is applied to the below-described description) the values of a parameter that define the shape of the three-dimensional structural object. In this case, the input screen 91 may include a parameter setting GUI 911 that is operable by the terminal user to set the values of the parameters. The information obtaining unit 312 may obtain, as at least part of the shape information, parameter information related to the parameter set by using the parameter setting GUI 911. The parameters may include numerical parameters that quantitatively define the shape of the three-dimensional structural object. In this case, the parameter setting GUI 911 may include a label indicating a name of a setting item of the numerical parameter, and a text box in which a setting value of the numerical parameter can be inputted (alternatively, a combo box, a drop-down list, or a radio button in which the setting value of the numerical parameter can be designated among a plurality of candidate values). Alternatively, the parameter may include a flag parameter for setting the shape of the three-dimensional structural object. The flag parameter is used to set the shape of the three-dimensional structural object to be one shape corresponding to the value of the flag parameter. For example, when the flag value of the flag parameter is set to a flag value of 1, the shape of the three-dimensional structural object may be set to be a first shape corresponding to the flag value of 1, and when the flag value of the flag parameter is set to a flag value of 2, the shape of the three-dimensional structural object may be set to be a second shape corresponding to the flag value of 2. In this case, the parameter setting GUI 911 may include a label indicating a name of a setting item of the flag parameter, and a text box in which a setting value (the flag value) of the flag parameter can be inputted (alternatively, a combo box, a drop-down list, or a radio button in which the setting value of the flag parameter can be designated among a plurality of candidate values).

For example, when a position of at least a part of the three-dimensional structural object changes, the shape of the three-dimensional structural object changes. Thus, the parameter may include a parameter that defines the position of at least a part of the three-dimensional structural object. For example, when a size of at least a part of the three-dimensional structural object changes, the shape of the three-dimensional structural object changes. Thus, the parameter may include a parameter that defines the size of at least a part of the three-dimensional structural object. For example, when a shape of at least a part of the three-dimensional structural object changes, the shape of the three-dimensional structural object changes. Thus, the parameter may include a parameter that defines the shape of at least a part of the three-dimensional structural object. For example, when a direction of at least a part of the three-dimensional structural object (for example, a direction in which at least a part of the three-dimensional structural object faces or extends) changes, the shape of the three-dimensional structural object changes. Thus, the parameters may include a parameter that defines the direction of at least a part of the three-dimensional structural obj ect.

The setting value of the parameter set by the terminal user (namely, the value of the parameter that has been set) may be displayed in the parameter setting GUI 911. Namely, the input screen 91 including the parameter setting GUI 911 may display the value of the parameter that has been set. The value of the parameter that has been set may be provided to the input screen 91. The setting value of the parameter displayed in the parameter setting GUI 911 may be updated each time the terminal user sets the parameter again. The setting value of the parameter displayed in the parameter setting GUI 911 may be updated periodically or at random cycles. The setting value of the parameter displayed on the parameter setting GUI 911 may be updated based on the terminal user's instruction (for example, triggered by the terminal user pressing a button that is included in the setting GUI 9 and that is for updating the setting value of the parameter). As a result, the terminal user can recognize the latest setting value of the parameter set by the terminal user himself. Note that the updating of the setting value of the parameter displayed in the parameter setting GUI 911 may be performed under the control of the display control unit 211 of the data generation server 2. In this case, the display control unit 211 may generate the GUI information so that the setting value of the parameter displayed in the parameter setting GUI 911 based on the shape information obtained from the terminal apparatus 3. Alternatively, the updating of the setting value of the parameter displayed in the parameter setting GUI 911 may be performed under the control of the display control unit 311 of the terminal apparatus 3. In this case, the display control unit 311 may update the setting value of the parameter displayed in the parameter setting GUI 911 based on the shape information obtained by the information obtaining unit 312 of the terminal apparatus 3.

In order to set the shape information, the terminal user may select an icon that defines the shape of the three-dimensional structural object by using the input screen 91 in addition to or instead of setting the value of the parameter. The icon is associated with a specific shape that is allowed to be set as the shape of the three-dimensional structural object. In this case, the input screen 91 may include an icon selection GUI 912 including a plurality of icons (alternatively, at least one icon) that are selectable by the terminal user to set the shape of the three-dimensional structural object to be the specific shape. Each of the plurality of icons included in the icon selection GUI 912 is selectable by the terminal user. The terminal user may set the shape information by selecting, from among the plurality of icons included in the icon selection GUI 912, one icon associated with the shape of the three-dimensional structural object which the terminal user wants to build. The information obtaining unit 312 may obtain, as at least a part of the shape information, icon information related to the icon selected by using the icon selection GUI 912 (namely, information related to the shape associated with the selected icon).

In the icon setting GUI 912, the icon selected by the terminal user may be displayed in a display aspect that is different from that of the icon not selected by the terminal user. FIG. 7 illustrates an example in which the icon selected by the terminal user is overlaid on a hatched area and the icon not selected by the terminal user is not overlaid on the hatched area. However, a state in which the display aspect of the icon selected by the terminal user is different from the display aspect of the icon not selected by the terminal user is not limited to a state illustrated in FIG. 7. For example, the icon selected by the terminal user may be displayed in a gray out state and the icon not selected by the terminal user may not be displayed in the gray out state. As a result, the terminal user can recognize the icon selected by the terminal user himself (namely, the shape of the three-dimensional structural object set by the terminal user himself).

Note that the terminal user may set the shape information by drawing the shape of the three-dimensional structural object on the setting GUI 9 (for example, on the input screen 91) in addition to or instead of selecting one icon from the plurality of icons. In this case, the setting GUI 9 may include a drawing GUI that allows the terminal user to draw the shape of the three-dimensional structural obj ect.

The input screen 91 may include a feature setting GUI 913 that is operable by the terminal user to set the feature information related to any feature of the three-dimensional structural object that is different from the shape of the three-dimensional structural object. For example, as illustrated in FIG. 7, the feature setting GUI 913 may include a GUI that is operable by the terminal user to set roughness of a surface of the three-dimensional structural object. The feature setting GUI 913 may include a GUI that is operable by the terminal user to set a type of a material for building the three-dimensional structural object. When a plurality of types of materials are used to build the three-dimensional structural object, the feature setting GUI 913 may include a GUI that is operable by the terminal user to set a mixing ratio of the plurality of types of materials. The feature information set by using the feature setting GUI 913 may be transmitted from the terminal apparatus 3 to the data generation server 2, as with the shape information. The data generation server 2 may use the feature information transmitted from the terminal apparatus 3 to generate the build control information for controlling the build apparatus 1 so that the three-dimensional build object having the feature defined by the feature information is built. Namely, the build apparatus 1 may build the three-dimensional build object having the feature defined by the feature information based on the feature information set by using the feature setting GUI 913.

A setting value of the feature information set by the terminal user may be displayed in the feature setting GUI 913.. The setting value of the feature information displayed in the feature setting GUI 913 may be updated each time the terminal user sets the feature information again. The setting value of the feature information displayed in the feature setting GUI 913 may be updated periodically or at random cycles. The setting value of the feature information displayed in the feature setting GUI 913 may be updated based on the terminal user's instructions (for example, triggered by the terminal user pressing a button included in the setting GUI 9 to update the setting value of the feature information). As a result, the terminal user can recognize the latest setting value of the feature information set by the terminal user himself. A method of displaying the setting value of feature information may be the same as a method of displaying the setting value of the parameter described above, so a detailed description of this method is omitted.

Note that the shape information set by using the parameter setting GUI 911 may be set by using the icon selection GUI 912. Similarly, the shape information set by using the icon selection GUI 912 may be set by using the parameter setting GUI 911. In short, the method of setting the shape information is not limited as long as the shape information is set by using the input screen 91. The same is true for the feature information.

The output screen 92 is a screen (in other words, an output unit) that is capable of displaying a three-dimensional model (namely, model information) based on the shape information set by the terminal user using the input screen 91. For example, the output screen 92 may be capable of displaying a three-dimensional model based on the value of the parameter set by the terminal user using the parameter setting GUI 911 included in the input screen 91 (namely, a three-dimensional model of the three-dimensional structural object having the shape defined by the value of the parameter set by the terminal user). For example, the output screen 92 may be capable of displaying a three-dimensional model based on the icon selected by the terminal user using the icon selection GUI 912 included in the input screen 91 (namely, a three-dimensional model of the three-dimensional structural object having the specific shape associated with the icon selected by the terminal user). For example, the output screen 92 may be capable of displaying a three-dimensional model based on the feature information set by the terminal user using the feature setting GUI 913 included in the input screen 91 (namely, a three-dimensional model of the three-dimensional structural object having the feature defined by the feature information set by the terminal user).

The data generation server 2 provides the three-dimensional model based on the shape information set by the terminal user using the input screen 91 to the output screen 92 displayed by the display apparatus 35 of the terminal apparatus 3. Specifically, in order to generate the GUI information related to the setting GUI 9 including the output screen 92, the data generation unit 213 of the data generation server 2 generates, based on the shape information (furthermore, other feature information if necessary) obtained by the information obtaining unit 212 from the terminal apparatus 3, three-dimensional model data representing the three-dimensional model based on the shape information set by the terminal user. Then, the display control unit 211 generates the GUI information related to the setting GUI 9 including the output screen 92 on which the three-dimensional model represented by the three-dimensional model data generated by the data generation unit 213 is displayed. The, the GUI information generated by the display control unit 211 is transmitted to the terminal apparatus 3 by using the communication apparatus 23. The display apparatus 35 of the terminal apparatus 3 displays the setting GUI 9 based on the GUI information transmitted from the data generation server 2. Namely, the display apparatus 35 uses the output screen 92 to display the three-dimensional model based on the shape information set by the terminal user. Namely, the display apparatus 35 displays, on the output screen 92, the three-dimensional model based on the shape information set by the terminal user. As a result, the terminal user can recognize the shape and so on of the three-dimensional model based on the shape information set by the terminal user relatively easily.

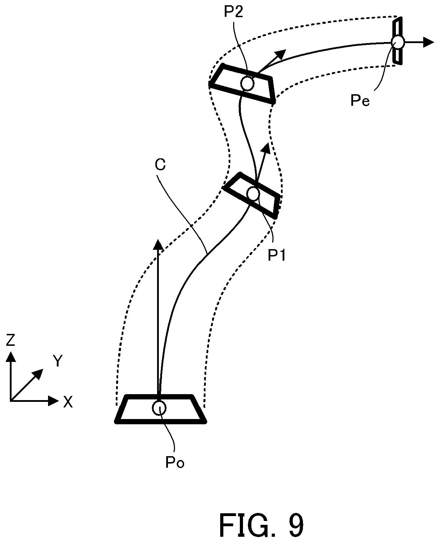

The three-dimensional model displayed on the output screen 92 may be a three-dimensional model in any format. For example, a three-dimensional model corresponding to a solid model or a surface model (see FIG. 7) may be displayed on the output screen 92. For example, a three-dimensional model corresponding to a wire frame model (see FIG. 9 below) may be displayed on the output screen 92.

The display control unit 211 may generate the GUI information related to the setting GUI 9, including the output screen 92 on which the three-dimensional model based on the newly obtained shape information is displayed, each time the information obtaining unit 212 newly obtains the shape information from the terminal apparatus 3. The display control unit 211 may generate the GUI information related to the setting GUI 9, including the output screen 92 on which the three-dimensional model based on the shape information newly set by the terminal user is displayed, each time the shape information is newly set (for example, changed or updated) by the terminal user using the setting GUI 9. The display control unit 211 may update the three-dimensional model displayed on the output screen 92 each time the shape information is newly set (for example, changed or updated) by the terminal user using the setting GUI 9. In this case, the three-dimensional model that reflects the shape information set by using the input screen 91 in real time is displayed on the output screen 92. As a result, the terminal user can relatively easily recognize the shape and so on of the three-dimensional model based on the latest shape information set by the terminal user himself. Alternatively, the display control unit 211 may generate the GUI information related to the setting GUI 9, including the output screen 92 on which the three-dimensional model reflecting the shape information set by using the input screen 91 is displayed, periodically or in a random cycle. In this case, the output screen 92 updates the three-dimensional model displayed on the output screen 92 periodically or at random cycles. Alternatively, the display control unit 211 may generate, based on the terminal user's instruction (for example, triggered by the terminal user pressing a button included in the setting GUI 9 to update the three-dimensional model displayed on the output screen 92), the GUI information related to the setting GUI 9, including the output screen 92 on which the three-dimensional model reflecting the shape information set by using the input screen 91. In this case, the output screen 92 updates the three-dimensional model displayed on the output screen 92 at a timing desired by the terminal user.

The display control unit 211 may generate the setting GUI 9 including the input screen 91 according to a type of the three-dimensional structural object so that the terminal user can set appropriate shape information according to the type of the three-dimensional structural object that is additively built by the build apparatus 1. Namely, the display control unit 211 may control the display apparatus 35 to display the setting GUI 9 including the input screen 91 according to the type of the three-dimensional structural object. In the present example embodiment, an example in which the build apparatus 1 builds the three-dimensional structural object that includes at least one of a pipe and a plate will be described, wherein the pipe corresponds to a member having a hollow structure (note that the pipe may be referred to as a tube), and the plate is a plate-like member, a size of the plate-like member in a direction perpendicular to a thickness direction is larger than a size of plate-like member in the thickness direction. Thus, in the below-described description, the input screen 91 that is displayed when the three-dimensional structural object includes the pipe and the input screen 91 that is displayed when the three-dimensional structural object includes the plate will be described in order. Namely, the input screen 91 for setting the shape information related to the shape of the pipe and the input screen 91 for setting the shape information related to the shape of the plate will be described in order.

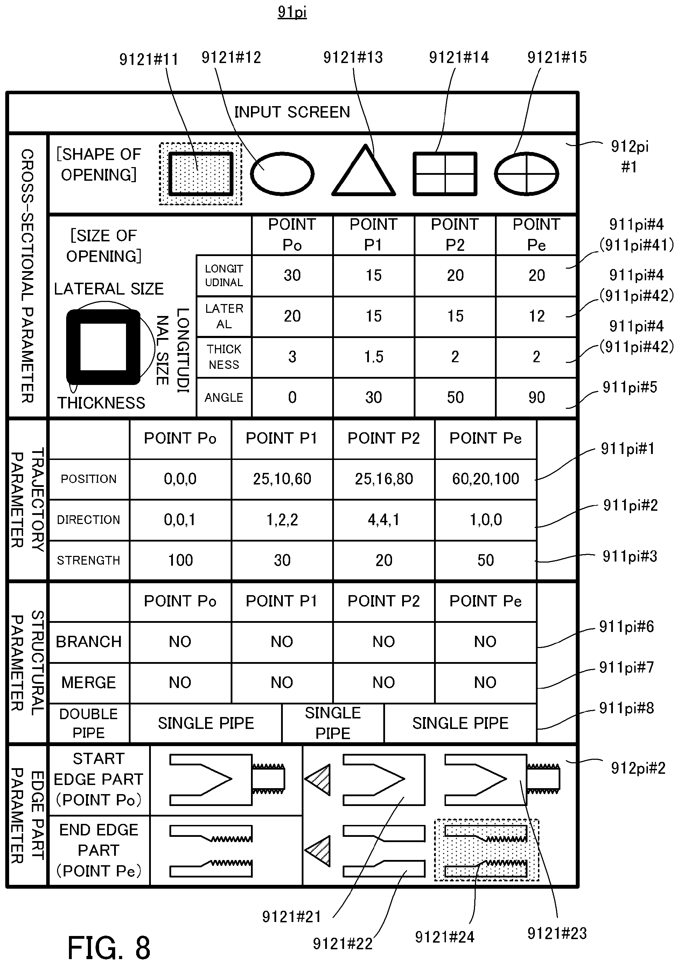

FIG. 8 illustrates an example of the input screen 91 for setting the shape information related to the shape of the pipe (hereinafter, it is referred to as an "input screen 91 pi").

As illustrated in FIG. 8, the input screen 91pi may include a parameter setting GUI 911pi (hereinafter, it is referred to as a "parameter setting GUI 911pi#1") for setting a value of a parameter that defines a position of at least a part of the pipe. Namely, the parameter that defines the shape of the pipe may include the parameter that defines the position of at least a part of the pipe. In the present example embodiment, the positions of a plurality of points P through which the pipe passes (for example, the position in a display coordinate system that is same as or different from the build coordinate system, the same is applied to the below-described description) are used as the parameters each of which defines the position of at least a part of the pipe. Specifically, when a centerline C of the pipe passes from a start point Po through intermediate points P1 and P2 in sequence to thereby reach an end point Pe as illustrated in FIG. 9, the input screen 91pi may include the parameter setting GUI 911pi#1 by which the values of the parameters that define the positions of the start point Po, the intermediate points P1 and P2 and the end point Pe can be set as illustrated in FIG. 8. Note that the number of points P is not limited to four illustrated in FIG. 9. Namely, the terminal user may set the position of the desired number of point P. The terminal user may add a new point P at a desired position or delete an existing point P by using the input screen 91pi. For example, in an example illustrated in FIG. 9, the terminal user may add other point P (for example, a point P located between the start point Po and the intermediate point P1) in addition to the start point Po, the intermediate points P1 and P2, and the end point Pe, and may set the position of the added other point P. For example, in the example illustrated in FIG. 9, the terminal user may not set the position of at least one of the start point Po, the intermediate points P1 and P2, and the end point Pe. Information related to the point P whose position is not set by the terminal user may not be displayed on the input screen 91.

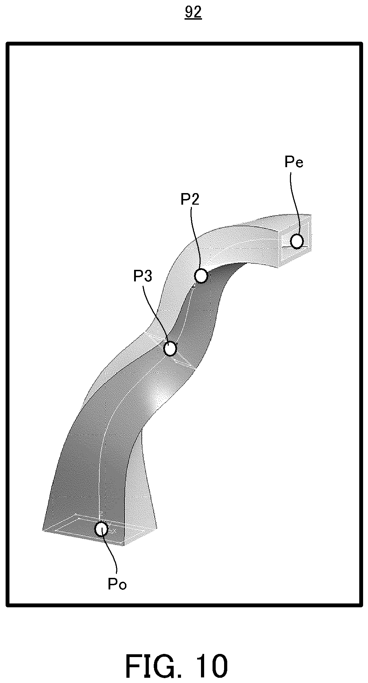

When the shape information is set by using the plurality of points P through which the pipe passes, the three-dimensional model with which the plurality of points P are associated may be displayed on the output screen 92, as illustrated in FIG. 10. In this case, the terminal user can relatively easily recognize how the shape of the three-dimensional model changes by setting the positions and so on of the plurality of points P.

Again in FIG. 8, the input screen 91pi may include a parameter setting GUI 911pi (hereinafter, it is referred to as a "parameter setting GUI 911pi#2") for setting a value of a parameter that defines a direction of at least a part of the pipe (namely, a direction along which at least a part of the pipe extends (advances)). Namely, the parameter that defines the shape of the pipe may include the parameter that defines the direction of at least a part of the pipe. In the present example embodiment, directions along which the pipe extends at the positions of the plurality of points P through which the pipe passes (for example, a direction along which the centerline C of the pipe at each point P extends, starting from point P) are used as the parameters each of which defines the direction of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#2 by which the values of the parameters that define a direction along which the pipe extends at the start point Po, a direction along which the pipe extends at the intermediate point P1, a direction along which the pipe extends at the intermediate point P2, and a direction along which the pipe extends at the end point Pe can be set.

As illustrated in FIG. 8, the input screen 91pi may include a parameter setting GUI 911pi (hereinafter, it is referred to as a "parameter setting GUI 911pi#3") for setting a value of a parameter that defines a magnitude (a strength) of a curvature of at least a part of the pipe. Namely, the parameter that defines the shape of the pipe may include the parameter that defines the strength of the curvature of at least a part of the pipe. In the present example embodiment, the strengths of the curvature of the pipe at the positions of the plurality of points P through which the pipe passes are used as the parameters each of which defines the strength of the curvature of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#3 by which the values of the parameters that define the strength of the curvature of the pipe at the start point Po, the strength of the curvature of the pipe at the intermediate point P1, the strength of the curvature of the pipe at the intermediate point P2, and the strength of the curvature of the pipe at the end point Pe can be set.

Incidentally, when each of the position, the direction, and the strength of the curvature of at least a part of the pipe changes, a trajectory along which the pipe extends changes. Thus, each of the parameter that defines the position of at least a part of the pipe, the parameter that defines the direction of at least a part of the pipe, and the parameter that defines the strength of the curvature of at least a part of the pipe may be referred to as a trajectory parameter that defines the trajectory along which the pipe extends.

As illustrated in FIG. 8, the input screen 91pi may include a parameter setting GUI 911pi (hereinafter, it is referred to as a "parameter setting GUI 911pi#4") for setting a value of a parameter that defines a size of at least a part of the pipe. Namely, the parameter that defines the shape of the pipe may include the parameter that defines the size of at least a part of the pipe. In the present example embodiment, the sizes of the pipe at the positions of the plurality of points P through which the pipe passes are used as the parameters each of which defines the size of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#4 by which the values of the parameters that define the size of the pipe at the start point Po, the size of the pipe at the intermediate point P1, the size of the pipe at the intermediate point P2, and the size of the pipe at the end point Pe can be set.

In the present example embodiment, the parameter setting GUI 911pi#4 may be a GUI for setting a value of a parameter that defines the size of a cross-section of at least a part of the pipe. For example, as illustrated in FIG. 8, the parameter setting GUI 911pi#4 may be a GUI by which the values of parameters that define the size of the cross-section of the pipe at the start point Po, the size of the cross-section of the pipe at the intermediate point P1, the size of the cross-section of the pipe at the intermediate point P2, and the size of the cross-section of the pipe at the end point Pe can be set. Note that the cross-section of at least a part of the pipe may mean a cross-section that intersects with (typically, is perpendicular to) the direction along which the pipe extends.

The size of the cross-section of at least a part of the pipe may include a size of the cross-section along a first direction that is along the cross-section (in other words, a first direction that intersects with the centerline C of the pipe). For example, as illustrated in FIG. 8, the parameter setting GUI 911pi#4 may include a parameter setting GUI 911pi#41 by which the values of the parameters that define the size of the cross-section of the pipe along the first direction (in the example illustrated in FIG. 8, a longitudinal direction) at the start point Po, the size of the cross-section of the pipe along the first direction at the intermediate point P 1, the size of the cross-section of the pipe along the first direction at the intermediate point P2, and the size of the cross section of the pipe along the first direction at the end point Pe can be set.

The size of the cross-section of at least a part of the pipe may include a size of the cross-section along a second direction that is along the cross-section and that intersects with (typically, is perpendicular to) the first direction. For example, as illustrated in FIG. 8, the parameter setting GUI 911pi#4 may include a parameter setting GUI 911pi#42 by which the values of the parameters that define the size of the cross-section of the pipe along the second direction (in the example illustrated in FIG. 8, a lateral direction) at the start point Po, the size of the cross-section of the pipe along the second direction at the intermediate point P1, the size of the cross-section of the pipe along the second direction at the intermediate point P2, and the size of the cross section of the pipe along the second direction at the end point Pe can be set.

Incidentally, when the shape of the cross-section of the pipe is a rectangular shape, the size of the cross-section of the pipe along the first direction may mean a distance (a length) between two outer surfaces of the pipe (outer walls of the pipe) facing each other along the first direction, and the size of the cross-section of the pipe along the second direction may mean a distance (a length) between two outer surfaces of the pipe (outer walls of the pipe) facing each other along the second direction. When the shape of the cross-section of the pipe is a circular shape, the size of the cross-section of the pipe along each of the first and second directions may mean a diameter of the outer surface of the pipe. In both cases, the size of the cross-section of the pipe along each of the first and second directions may be referred to as an outer diameter of the pipe.

The size of the cross-section of at least a part of the pipe may include a thickness of a wall (in other words, a pipe wall) of the pipe along the cross-section. For example, as illustrated in FIG. 8, the parameter setting GUI 911pi#4 may include a parameter setting GUI 911pi#43 by which the values of the parameters that define the thickness of the wall of the pipe at the start point Po, the thickness of the wall of the pipe at the intermediate point P1, the thickness of the wall of the pipe at the intermediate point P2, and the thickness of the wall of the pipe at the end point Pe can be set. Note that the thickness of the wall of the pipe may mean a distance (a length) between an inner surface of the pipe (namely, a side surface of the pipe facing toward the centerline C side, and an inner wall) and an outer surface of the pipe (namely, a side surface of the pipe facing toward a side opposite to the centerline C side, and an outer wall).

When the size of the cross-section of at least a part of the pipe along the first direction, the size of the cross-section of at least a part of the pipe along the second direction, and the thickness of the wall of at least a part of the pipe are determined, each of an inner diameter of the pipe (namely, a diameter of the inner surface of the pipe or a distance (a length) between two inner side faces of the pipe facing each other) and the outer diameter of the pipe (namely, the diameter of the outer surface of the pipe) is determined. Therefore, setting the value of the parameter that defines the size of the cross-section of at least a part of the pipe along the first direction, the value of the parameter that defines the size of the cross-section of at least a part of the pipe along the second direction, and the value of the parameter that defines the thickness of the wall of at least a part of the pipe may be regarded to be equivalent to setting a value of a parameter that defines the inner diameter of the pipe and the value of the parameter that defines the outer diameter of the pipe. Alternatively, the parameter setting GUI 911pi#4 may include a parameter setting GUI 911 for directly setting the value of the parameter that defines the inner diameter of at least a part of the pipe. The parameter setting GUI 911pi#4 may include a parameter setting GUI 911 for directly setting the value of the parameter that defines the outer diameter of at least a part of the pipe.

As illustrated in FIG. 8, the input screen 91pi may include a parameter setting GUI 911pi (hereinafter, it is referred to as a "parameter setting GUI 911pi#5") for setting a value of a parameter that defines an angle (a rotational angle) of at least a part of the pipe. Namely, the parameter that defines the shape of the pipe may include the parameter that defines the angle of at least a part of the pipe. In the present example embodiment, the rotational angles of the pipe at the positions of the plurality of points P through which the pipe passes are used as the parameters each of which defines the rotational angle of at least a part of the pipe. Here, the rotational angle of the pipe at the position of point P may mean the rotational angle (specifically, the rotation angle relative to a reference altitude) of the cross-section of the pipe at the point P around an axis that is along the centerline C of the pipe at the position of the point P. Specifically, when the pipe passes from the start point Po through the intermediate points P1 and P2 in sequence to thereby reach the end point Pe as illustrated in FIG. 9, the input screen 91pi may include the parameter setting GUI 911 pi#5 by which the values of the parameters that define the rotational angle of the cross-section of the pipe at the start point Po, the rotational angle of the cross-section of the pipe at the intermediate point P1, the rotational angle of the cross-section of the pipe at the intermediate point P2, and the rotational angle of the cross-section of the pipe at the end point Pe can be set. Incidentally, when the cross-section of the pipe is an infinitely rotationally symmetric cross-section, such as an exact circle, the parameter setting GUI 911pi#5 may be displayed in a display aspect that does not allow the terminal user to set (input) the setting value of the parameter. For example, a part of the parameter setting GUI 911pi#5 may be displayed in a gray out state.

Incidentally, in the above-described example, when each of the size of at least a part of the pipe and the rotational angle of at least a part of the pipe each changes, the shape of the cross-section of at least a part of the pipe changes. Thus, each of the parameter that defines the size of at least a part of the pipe and the parameter that defines the rotational angle of at least a part of the pipe may be referred to as a cross-sectional parameter (a section parameter) related to the cross-section of at least a part of the pipe.

As illustrated in FIG. 8, the input screen 91pi includes a parameter setting GUI 911pi (hereinafter, it is referred to as a "parameter setting GUI 911pi#6") for setting a value of a parameter that defines a presence or absence of a branch of at least a part of the pipe. Namely, the parameters that defines the shape of the pipe may include the parameter that defines the presence or absence of the branch of at least a part of the pipe. In the present example embodiment, parameters that define the presence or absence of the branch of the pipe at the positions of the plurality of points P through which the pipe passes are used as the parameters each of which defines the presence or absence of the branch of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#6 by which the values of the parameters that define the presence or absence of the branch of the pipe at the start point Po, the presence or absence of the branch of the pipe at the intermediate point P1, the presence or absence of the branch of the pipe at the intermediate point P2, and the presence or absence of the branch of the pipe at the end point Pe can be set. Namely, the input screen 91pi may include the parameter setting GUI 911pi#6 by which the parameters that define whether or not the pipe is branched at the start point Po, whether or not the pipe is branched at the intermediate point P1, whether or not the pipe is branched at the intermediate point P2, and whether or not the pipe is branched at the end point Pe can be set. Incidentally, when the setting value of the parameter that defines the presence or absence of the branch of the pipe is set to a value indicating the presence of the pipe in the parameter setting GUI 91 1pi#6, an input screen that is used by the terminal user to set at least one of the cross-sectional parameter, the trajectory parameter, and an edge part parameter related to the branched pipe. In this case, the input screen for setting the edge part parameter may display at least one of a screen for setting the edge part parameter related to a start edge part and a screen for setting the edge part parameter related to an end edge part.

As illustrated in FIG. 8, the input screen 91pi may include a parameter setting GUI 911pi (hereinafter, it is referred to as a "parameter setting GUI 911pi#7") for setting a value of a parameter that defines a presence or absence of a merge of at least a part of the pipe (namely, the merge of plurality of branched pipe conduits). Namely, the parameters that define the shape of the pipe may include the parameter that defines the presence or absence of the merge of at least a part of the pipe. In the present example embodiment, the parameters that define the presence or absence of the merge of at least a part of the pipe at the positions of the plurality of points P through which the pipe passes are used as the parameters each of which defines the presence or absence of the merge of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#7 by which the values of the parameters that define the presence or absence of the merge of the pipe at the start point Po, the presence or absence of the merge of the pipe at the intermediate point P1, the presence or absence of the merge of the pipe at the intermediate point P2, and the presence or absence of the merge of the pipe at the end point Pe can be set. Namely, the input screen 91pi may include the parameter setting GUI 911pi#7 by which the parameters that define whether or not the plurality of branched pipe conduits are merged at the start point Po, whether or not the plurality of branched pipe conduits are merged at the intermediate point P1, whether or not the plurality of branched pipe conduits are merged at the intermediate point P2, and whether or not the plurality of branched pipe conduits are merged at the end point Pe can be set. Incidentally, when the setting value of the parameter that defines the presence or absence of the merge of the pipe is set to a value indicating the presence of the merge of the pipe in the parameter setting GUI 911pi#7, an input screen that is used by the terminal user to set at least one of the cross-sectional parameter, the trajectory parameter, and the edge part parameter related to the merged pipe. In this case, the input screen for setting the edge part parameter may display at least one of a screen for setting the edge part parameter related to the start edge part and a screen for setting the edge part parameter related to the end edge part.

As illustrated in FIG. 8, the input screen 91pi may include a parameter setting GUI 911pi (hereinafter, it is referred to as a "parameter setting GUI 911pi#8") for setting a value of a parameter that defines a multiple structure of at least a part of the pipe. Namely, the parameter that defines the shape of the pipe may include the parameter that defines the multiple structure of at least a part of the pipe. In the present example embodiment, parameters that define the multiple structure of the pipe at the positions of the plurality of points P through which the pipe passes are used as the parameters each of which defines the multiple structure of at least a part of the pipe. Specifically, when the pipe passes from the start point Po through the intermediate points P1 and P2 in sequence to thereby reach the end point Pe as illustrated in FIG. 9, the input screen 91pi may include the parameter setting GUI 911pi#8 by which the values of the parameters that define the multiple structure of the pipe between the start point Po and the intermediate point P1, the multiple structure of the pipe between the intermediate point P1 and the intermediate point P2, and the multiple structure of the pipe between the intermediate point P2 and the end point Pe can be set. Namely, the input screen 91pi may include the parameter setting GUI 911pi#8 by which the value of the parameter that defines whether the pipe is a multiple pipe (for example, a double pipe) or a single pipe between the start point Po and the intermediate point P1, the value of the parameter that defines whether the pipe is the multiple pipe or the single pipe between the intermediate point P1 and the intermediate point P2, and the value of the parameter that defines whether the pipe is the double pipe or the single pipe between the intermediate point P2 and the end point Pe can be set.

Incidentally, in the above-described example, the presence or absence of the branch, the presence or absence of the merge, and the multiple structure of at least a part of the pipe are all related to the structure of the pipe. Thus, each of the parameter that defines the presence or absence of the branch of at least a part of the pipe, the parameter that defines the presence or absence of the merge of at least a part of the pipe, and the parameter that defines the multiple structure of at least a part of the pipe may be referred to as a structural parameters related to the structure of at least a part of the pipe.

As illustrated in FIG. 8, the input screen 91pi may include an icon selection GUI 912pi (hereinafter, it is referred to as an "icon selection GUI 912pi#1") including a plurality of icons each of which is selectable to set the shape of the cross-section of at least a part of the pipe (namely, a shape of an opening, and a shape of the pipe in a plane intersecting with the direction along which the pipe extends) to be a specific type of shape. For example, FIG. 8 illustrates an example in which the icon selection GUI 912pi#1 includes: an icon 9121#11 that is selectable to set the shape of the cross-section of at least a part of the pipe to be a rectangular shape; an icon 9121#12 that is selectable to set the shape of the cross-section of at least a part of the pipe to be an oval shape (alternatively, a circular shape); an icon 9121#13 that is selectable to set the shape of the cross-section of at least a part of the pipe to be a triangular shape; an icon 9121#14 that is selectable to set the shape of the cross-section of at least a part of the pipe to be a rectangular shape, wherein a pipe conduit is divided into a plurality of compartments by a compartment wall; and an icon 9121#15 that is selectable to set the shape of the cross-section of at least a part of the pipe to be an oval shape (alternatively, a circular shape), wherein a pipe conduit is divided into a plurality of compartments by a compartment wall. Namely, FIG. 8 illustrates an example in which the icon selection GUI 912pi#1 includes the plurality of icons related to the plurality of cross-sections of the pipe (namely, the plurality of icons related to a plurality different shapes of the cross-section). The terminal user may set the shape of the cross-section of at least a part of the pipe to be a specific type of shape corresponding to the selected icon by selecting any one of the icons 9121#11 through 9121#15. Namely, the terminal user sets the shape information related to the shape of the cross-section of at least a part of the pipe by using the icon selection GUI 912pi#1 to select the icon related to the plurality of cross-sections of the pipe (namely, to select a desired icon from the plurality of icons related to the plurality of different shapes of the cross-section).

In the present example embodiment, the shapes of the cross-section of the pipe at each of the positions of the plurality of points P through which the pipe passes are used as the shape of the cross-section of at least a part of the pipe. Specifically, when the pipe passes from the start point Po through the intermediate points P1 and P2 in sequence to thereby reach the end point Pe as illustrated in FIG. 9, the terminal user may use the icon selection GUI 912pi#1 to set the shape of the cross-section of the pipe at the start point Po, the shape of the cross-section of the pipe at the intermediate point P1, the shape of the pipe at the intermediate point P2, and the shape of the cross-section of the pipe at the end point Pe. Namely, the terminal user may use the icon selection GUI 912pi#1 to select the icon that designates each of the cross-sections of the pipe at the plurality of points.

Incidentally, in the above-described example, each of the size of at least a part of the pipe, the rotational angle of at least a part of the pipe, and the type of the shape of the cross-section of at least a part of the pipe each changes, the shape of the cross-section of at least a part of the pipe changes. Thus, each of the parameter that defines the size of at least a part of the pipe, the parameter that defines the rotational angle of at least a part of the pipe, and the type of the shape of the cross-section of at least a part of the pipe may be referred to as the cross-sectional parameter (the section parameter) related to the cross-section of at least a part of the pipe.

The terminal user may set the shape information by using at least one of the parameter setting GUI 911 and the icon selection GUI 912 so that the shapes of the cross-sections of the pipe at the plurality of points P through which the pipe passes are all the same type of shapes. Note that the "type of shape" here may mean, for example, a type of shape of the cross-section that is allowed to be selected by using the icon selection GUI 912pi#1. Thus, a state in which the shapes of the cross-sections of the pipe at the plurality of points P are all the same type of shape may mean a state in which the shapes of the cross-sections of the pipe at the plurality of points P are set to one type of shape associated with one icon.

Alternatively, the terminal user may set the shape information by using at least one of the parameter setting GUI 911 and the icon selection GUI 912 so that the shapes of the cross-sections of the pipe at at least two of the plurality of points P through which the pipe passes are different types of shapes. Note that a state in which the shapes of the cross-sections of the pipe at at least two points P are different types of shapes may mean a state in which the shape of the cross-section of the pipe at a first point P is set to be a first type of shape associated with a first icon and the shape of the cross-section of the pipe at a second point P is set to be a second type of shape associated with a second icon. For example, the terminal user may set the shape of the cross-section of the pipe at the first point P (for example, any one of the start point Po, the intermediate point P1, the intermediate point P2, and the end point Pe) among the plurality of points P through which the pipe passes to be a first shape (for example, a rectangular shape) and set the shape of the cross-section of the pipe at the second point P (for example, other one of the start point Po, the intermediate point P1, the intermediate point P2, and the end point Pe) to be a second shape (for example, a circular shape) that is different from the first shape. In this case, the shape of the cross-section of the pipe changes from the first shape to the second shape between the first point P and the second point P. Therefore, the output screen 92 may also display the three-dimensional model of the pipe in which the shape of the cross-section changes from the first shape to the second shape between the first point P and the second point P. For example, when the shape information is set so that the shape of the cross-section of the pipe at the first point P is the first shape and then the shape information is set so that the shape of the cross-section of the pipe at the second point P is the second shape, a model part of the three-dimensional model, which is displayed on the output screen 92, between the first point P and the second point P may be updated. More specifically, for example, when the value of the parameter is set so that the shape of the cross-section of the pipe at the first is the first shape and then the value of the parameter is set so that the shape of the cross-section of the pipe at the second point P is the second shape, the model part of the three-dimensional model, which is displayed on the output screen 92, between the first point P and the second point P (especially, the shape of this model part) may be updated depending on the setting of the value of the parameter that defines the shape of the pipe at the second point P2. For example, when the icon is selected so that the shape of the cross-section of the pipe at the first is the first shape and then the icon is selected so that the shape of the cross-section of the pipe at the second point P is the second shape, the model part of the three-dimensional model, which is displayed on the output screen 92, between the first point P and the second point P (especially, the shape of this model part) may be updated depending on the selection of the icon to set the shape of the pipe at the second point P. However, not only in a case where the shapes of the cross-sections of the pipe at at least two of the plurality of points P are different types of shapes but also in a case where the shape information is set so that the shape of the cross-section of the pipe at the first point P is the first shape and then the shape information is set so that the shape of the cross-section of the pipe at the second point P is the second shape, the model part of the three-dimensional model, which is displayed on the output screen 92, between the first point P and the second point P (especially, the shape of this model part) may be updated

Incidentally, in the example illustrated in FIG. 8, the icon selection GUI 912pi#1 includes the plurality of icons each of which is selectable to collectively set the shapes of the cross-sections of both of the inner surface and the outer surface of at least a part of the pipe to be a specific type of shape. However, the icon selection GUI 912pi#1 may separately include a plurality of icons each of which is selectable to set the shape of the cross-section of the inner surface of at least a part of the pipe to be a specific shape and a plurality of icons each of which is selectable to set the shape of the cross-section of the outer surface of at least a part of the pipe to be a specific shape. In this case, the terminal user may separately set the shape of the cross-section of the inner surface of at least a part of the pipe and the shape of the cross-section of the outer surface of at least a part of the pipe. The terminal user may select the icons so that the shape of the cross-section of the inner surface of at least a part of the pipe is different from the shape of the cross-section of the outer surface of at least a part of the pipe.

As illustrated in FIG. 8, the input screen 91pi may include an icon selection GUI 912pi (hereinafter, it is referred to as an "icon selection GUI 912pi#2") including a plurality of icons each of which is selectable to set a shape of the edge part of the pipe to be a specific type of shape. Note that the shape of the edge part of the pipe may be referred to as the edge part parameter related to the edge part of the pipe. The edge part of the pipe may include, for example, at least one of the start edge part of the pipe and the end edge part of the pipe. The start edge part of the pipe may include a part of the pipe located between the start point Po and a position that is away from the start point Po by a predetermined distance along the direction along which the pipe extends. The end edge part of the pipe may include a part of the pipe located between the end point Pe and a position that is away from the end point Pe by a predetermined distance along the direction along which the pipe extends. For example, FIG. 8 illustrates an example in which the icon selection GUI 912pi#2 includes: an icon 9121#21 that is selectable to set the shape of the edge part of the pipe to be a first shape in which the inner diameter of the pipe between the edge part and a position that is away from the edge part by a predetermined distance gradually decrease toward the edge part and the edge part is a closed edge; an icon 9121#22 that is selectable to set the shape of the edge part of the pipe to be a second shape in which the inner diameter of the pipe between the edge part and a position that is away from the edge part by a predetermined distance gradually decreased toward the edge part, the inner diameter is constant near the edge part, and the edge part is an opened edge; an icon 9121#23 that is selectable to set the shape of the edge part of the pipe to be a third shape in which the inner diameter of the pipe between the edge part and a position that is away from the edge part by a predetermined distance gradually decrease toward the edge part, the edge part is a closed edge, and a threaded projecting part (namely, a part corresponding to an external screw or a screw part) is formed on the edge part; and an icon 9121#24 that is selectable to set the shape of the edge part of the pipe to a fourth shape in which the inner diameter of the pipe between the edge part and a position that is away from the edge part by a predetermined distance gradually decrease toward the edge part, the inner diameter is constant near the edge part, the edge part is an opened edge, and an inner surface of the pipe near the edge part is threaded (namely, the edge part is an internal screw or a screw hole). The terminal user may set the shape of the edge part of the pipe to be the specific shape corresponding to the selected icon by selecting any one of the icons 9121#21 to 9221#24.

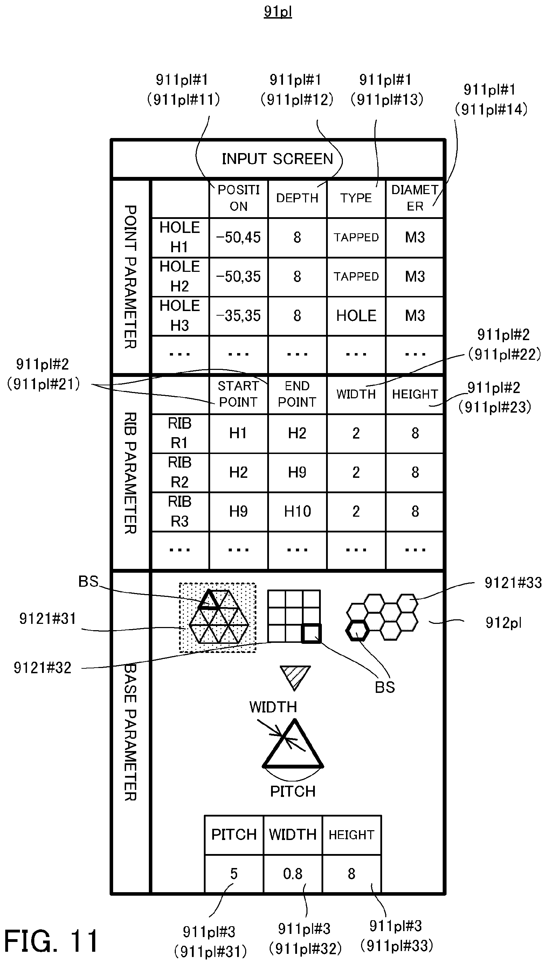

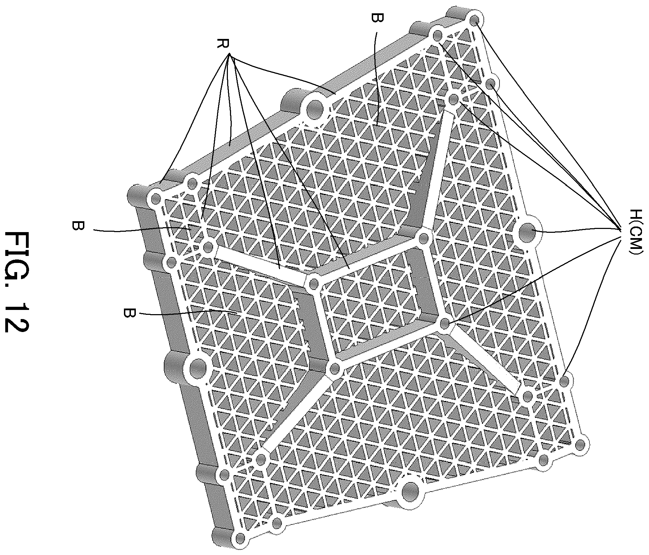

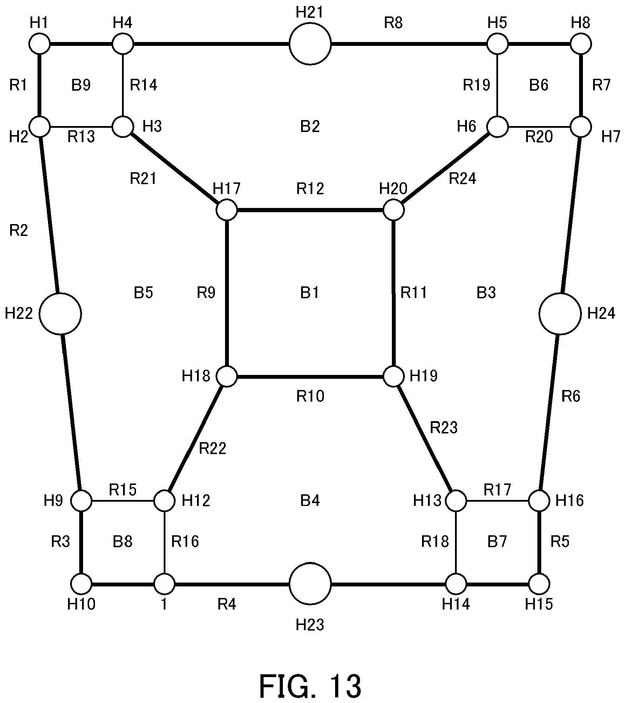

Next, FIG. 11 illustrates an example of the input screen 91 for setting the shape information related to the shape of the plate (hereinafter, it is referred to as an "input screen 91pl"). Incidentally, the present example embodiment describes the input screen 91pl that is used when the plate includes: a cylindrical part CM for forming at least one hole (namely, a hole formed in the plate so as to extend along a thickness direction of the plate) H; a rib-shaped rib part (an extending part) R extending from the hole H (namely, the cylindrical part CM) along a surface of the plate; and a base part B formed in an area surrounded by the rib part R, as illustrated in FIG. 12 that is a perspective view illustrating one example of the plate. More specifically, as illustrated in FIG. 13 that illustrates a simplified wireframe model of the plate in a form of a solid model illustrated in FIG. 12, the input screen 91pl will be described, which is used when the plate includes: cylindrical parts CM1 to CM24 that form holes H1 to H24, respectively; rib parts R1 to R24 each of which extends from one of the holes H1 to H24 to another one of the holes H1 to H24; and a base parts B1 to B8 formed in an area surrounded by at least four of the rib parts R1 to R24 is described. Note that the number of holes H, the number of rib parts R, and the number of base parts B are not limited to the examples illustrated in FIG. 12 and FIG. 13. The terminal user may add a new holes H (a new cylindrical part CM) or delete an existing hole H (an existing cylindrical part CM) by using the input screen 91pl. The terminal user may add a new rib part R or delete an existing rib part R by using the input screen 91pl. The terminal user may add a new base part B or delete an existing base part B by using the input screen 91pl. Moreover, when the shape information related to the shape of the plate is set, each of the three-dimensional model of the plate corresponding to the solid model illustrated in FIG. 12 and the three-dimensional model of the plate corresponding to the wire frame model illustrated in FIG. 13 may be displayed on the output screen 92.

As illustrated in FIG. 11, the input screen 91pl may include a parameter setting GUI 911pl (hereinafter, it is referred to as a "parameter setting GUI 911pl#1") for setting a value of a parameter defining a hole H (more specifically, the cylindrical part CM forming a hole H) corresponding to at least a part of the plate. In this case, the terminal user may use the parameter setting GUI 911pl#1 to set a plurality of parameters that define the plurality of holes H formed respectively at a plurality of points of the plate. Namely, the terminal user may use the parameter setting GUI 911pl#1 to set values of the parameters for the plurality of points of the plate. Note that the hole H is formed at a certain point on the plate. Thus, the parameter that defines the hole H may be referred to as a point parameter.

The parameter setting GUI 911pl#1 may include a parameter setting GUI 911pl#11 for setting a value of a parameter that defines a position of the hole H (namely, a position of the cylindrical part CM). For example, as illustrated in FIG. 11, the parameter setting GUI 911pl#1 may include the parameter setting GUI 911pl#11 by which the value of the parameter that defines the position of each of the holes H1 to H24 (namely, the position of each of the cylindrical parts CM1 to CM24) can be set.

The parameter setting GUI 911pl#1 may include a parameter setting GUI 911pl#12 for setting a value of a parameter that defines a depth of the hole H (namely, a size of the hole H along the thickness direction of the plate, and it is equivalent to a height of the cylindrical part CM along the thickness direction of the plate). For example, as illustrated in FIG. 11, the parameter setting GUI 911pl#12 may include the parameter setting GUI 911pl#12 by which the value of the parameter that defines the depth of each of the holes H1 to H24 (namely, the height of each of the cylindrical parts CM1 to 24) can be set as the value of the parameter that defines the shape of the hole H.

The parameter setting GUI 911pl#1 may include a parameter setting GUI 911pl#13 for setting a value of a parameter that defines a type of shape of the inner surface facing the hole H (namely, the inner surface of the cylindrical part CM). For example, as illustrated in FIG. 11, the parameter setting GUI 911pl#1 may include the parameter setting GUI 911pl#13 by which the type of shape of each of the inner surfaces facing the holes H1 to H24 can be set as the value of the parameter that defines the shape of hole H. Note that each of a tapped shape with a threaded inner surface and a hole shape with an unthreaded inner surface is one example of the type of shape of the inner surface facing the hole H. Thus, the terminal user may use the parameter setting GUI 911pl#13 to set the type of shape of the inner surface facing hole H to either one of the tapped shape and the hole shape.

The parameter setting GUI 911pl#1 may include a parameter setting GUI 911pl#14 for setting a value of a parameter that defines a diameter of the hole H (namely, a size of the hole H in the direction along the surface of the plate, and it is equivalent to a size of the cylindrical part CM in the direction along the surface of the plate). For example, as illustrated in FIG. 11, the parameter setting GUI 911pl#1 may include the parameter setting GUI 911pl#14 by which the diameter of each of the holes H1 to H24 (namely, the size of each of the cylindrical parts CM1 to CM24) can be set as the value of the parameter that defines the shape of the hole H.

As illustrated in FIG. 11, the input screen 91pl may include a parameter setting GUI 911pl (hereinafter, it is referred to as a "parameter setting GUI 911 pl#2") for setting a value of a parameter that defines the rib part R corresponding to at least a part of the plate. In this case, the terminal user may use the parameter setting GUI 911 pl#2 to set the values of the plurality of parameters that define the plurality of rib parts R that are formed respectively at a plurality of points of the plate. Namely, the terminal user may use the parameter setting GUI 911pl#2 to set the values of the parameters for the plurality of points of the plate. The parameter that defines the rib part R may be referred to as a rib parameter.

The parameter setting GUI 911pl#2 may include a parameter setting GUI 911pl#21 for setting a value of a parameter that defines a position of the rib part R. For example, as illustrated in FIG. 11, the parameter setting GUI 911 pl#2 may include the parameter setting GUI 911pl#11 by which the value of the parameter that defines the position of each of the rib parts R1 to R24 can be set. More specifically, in the present example embodiment, the rib part R extends from one hole H to another hole H (namely, from one cylindrical part CM to another cylindrical part CM). Therefore, in the present example embodiment, a parameter that defines the hole H located at a start point of the rib part R and a parameter that defines the hole H located at an end point of the rib part R may be used as the parameters that define the position of the rib part R. Namely, the parameter setting GUI 911pl#2 may include the parameter setting GUI 911pl#21 by which the values of the parameters that define the holes H located at the start point and the holes H located at the end point of each of the rib parts R1 to R24 can be set.

The parameter setting GUI 911pl#2 may include a parameter setting GUI 911pl#22 for setting a value of a parameter that defines a width of the rib part R (namely, a size of the rib part R in a direction that is along the surface of the plate and that intersects with the direction along which the rib part R extends). For example, as illustrated in FIG. 11, the parameter setting GUI 911pl#2 may include the parameter setting GUI 911pl#22 by which the value of the parameter that defines the width of each of the rib parts R1 to R24 can be set as the value of the parameter that defines the shape of the rib part R.

The parameter setting GUI 911pl#2 may include a parameter setting GUI 911pl#23 for setting a value of a parameter that defines a height of the rib part R (namely, a size of the rib part R along the thickness direction of the plate). For example, as illustrated in FIG. 11, the parameter setting GUI 911pl#2 may include the parameter setting GUI 911pl#23 by which the value of the parameter that defines the height of each of the rib parts R1 to R24 can be set as the value of the parameter that defines the shape of the rib part R.

As illustrated in FIG. 11, the input screen 91pl may include an icon selection GUI 912pl including a plurality of icons each of which is selectable to set a structure (namely, a shape) of the base part B, which corresponds to at least a part of the plate, to be a specific type of structure. The base part B is formed in an area surrounded by the plurality of rib parts R, as described above. In this case, the base part B may be regarded to be a part for filling the area surrounded by the plurality of rib parts R. Thus, the structure of the base part B may mean a structure for filling the area surrounded by the plurality of rib parts R. For example, FIG. 11 illustrates an example in which the icon selection GUI 912pl includes: an icon 9121#31 that is selectable to set the structure of base part B to be a first structure which is filled with a plurality of base structures BS along the surface of the plate, wherein a shape of a cross-section of the base structure BS along the surface of the plate is a triangular shape; an icon 9121#32 that is selectable to set the structure of base part B to be a second structure which is filled with a plurality of base structures BS along the surface of the plate, wherein a shape of a cross-section of the base structure BS along the surface of the plate is a rectangular shape; and an icon 9121#32 that is selectable to set the structure of base part B to be a third structure which is filled with a plurality of base structures BS along the surface of the plate, wherein a shape of a cross-section of the base structure BS along the surface of the plate is a hexagonal shape. The terminal user may set the type of structure of the base part B to be the specific structure corresponding to the selected icon by selecting any one of the icons 9121#31 to 9121#33. Note that the base structure BS is a structure in which a rib-shaped part extending along the surface of the plate constitutes each side of the base structure BS (specifically, each side of the cross-section of the base structure BS along the surface of the plate).

As described above, the plate may include the plurality of base parts B (see FIG. 13). In this case, the terminal user may use the icon selection GUI 912pl to set the structure of each of the base parts B1 to B8. Namely, the terminal user may select icons for a plurality of points of the plate.

As illustrated in FIG. 11, the input screen 91pl may include a parameter setting GUI 911pl (hereinafter, it is referred to as a "parameter setting GUI 911pl#3") for setting a value of a parameter that defines the size of the base part B corresponding to at least a part of the plate. In this case, the terminal user may use the parameter setting GUI 911pl#3 to set the values of the plurality of parameters that define the shape of the plurality of base parts B that are formed respectively in a plurality of points of the plate. The parameter that defines the size of the base parts B may be referred to as a base parameter. Similarly, the type of structure (shape) of the base part B set by the icon selection GUI 912pl may also be referred to as the base parameter.

The parameter setting GUI 911pl#3 may include a parameter setting GUI 911pl#31 for setting a value of a parameter that defines a pitch of the base structure BS that constitutes the base part B. For example, as illustrated in FIG. 11, the parameter setting GUI 911pl#3 may include the parameter setting GUI 911 pl#31 by which the value of the parameter that defines the pitch of the base structure BS that constitutes each of the base parts B1 to B8 can be set. The pitch of the base structure BS may be equivalent to an array interval between the base structures BS. When the pitch of the base structure BS is determined, a size of one side of the base structure BS (for example, a size of one side of a triangle, a rectangle or a hexagon) is determined. Therefore, setting the pitch of the base structure BS may be regarded to be equivalent to setting the size of one side of the base structure BS. Note that a distance between vertices, which face toward each other, of the base structure BS may be used as the pitch of the base structure BS. A distance between sides, which face toward each other, of the base structure BS may be used as the pitch of the base structure BS.

The parameter setting GUI 911pl#3 may include a parameter setting GUI 911pl#32 for setting a value of a parameter that defines a width of the base structure BS that constitutes the base part B (namely, a size of the base structure BS in a direction along the surface of the plate, specifically, a size of rib-shaped part in a direction that is along the surface of the plate and that intersects with a direction along which the rib-shaped part, which constitutes the base structure BS, extends). For example, as illustrated in FIG. 11, the parameter setting GUI 911pl#3 may include the parameter setting GUI 911pl#32 by which the value of the parameter that defines the width of the base structure BS that constitutes each of the base parts B1 to B8 can be set.

The parameter setting GUI 911pl#3 may include a parameter setting GUI 911pl#33 for setting a value of a parameter that defines a height of the base structure BS that constitutes the base part B (namely, a size of the base structure BS along the thickness direction of the plate). For example, as illustrated in FIG. 11, the parameter setting GUI 911pl#33 may include the parameter setting GUI 911pl#33 by which the value of the parameter that defines the height of the base structure BS that constitutes each of the base parts B1 to B8 can be set.

Again in FIG. 6, the data generation unit 213 of the data generation server 2 determines whether or not the operation of setting the shape information using the setting GUI 9 has been completed (a step S15). For example, the data generation unit 213 may determine that the operation of setting the shape information using the setting GUI 9 has been completed when the terminal user instructs, by using the input apparatus 34 of the terminal apparatus 3, to complete the operation of setting the shape information.

As a result of the determination at the step S15, when it is determined that the operation of setting the shape information using the setting GUI 9 has not been completed (the step S15: No), the operation of setting the shape information using the setting GUI 9 is continued. Namely, the build system SYS continues the operation from the step S13 to the step S14.

On the other hand, when it is determined that the operation of setting the shape information using the setting GUI 9 has been completed (the step S15: Yes), the data generation unit 213 generates, based on the latest shape information obtained by the information obtaining unit 212 at the step S13, the three-dimensional model of the three-dimensional structural object having the shape defined by the shape information set by the terminal user (a step S16).

The format of the three-dimensional model data may be any format. For example, the data generation unit 213 may generate the three-dimensional model data compliant with a STL (Standard Triangulated Language) file format. For example, the data generation unit 213 may generate the three-dimensional model data compliant with a STEP (Standard for Exchange of Product Model Data) file format. For example, the data generation unit 213 may generate the three-dimensional model data compliant with an IGES (Initial Graphics Exchange Specification) file format. For example, the data generation unit 213 may generate the three-dimensional model data compliant with ta DWG file format. For example, the data generating unit 213 may generate the three-dimensional model data compliant with a DXF (Drawing Exchange Format) file format. For example, the data generating unit 213 may generate the three-dimensional model data compliant with a VRMI, (Virtual Reality Modeling Language) file format. For example, the data generating unit 213 may generate the three-dimensional model data compliant with an ISO 10303 file format.

The data generation unit 213 may store the generated three-dimensional model data in the storage apparatus 22. Alternatively, the data generation unit 213 may store, in addition to or instead of the generated three-dimensional model data, the shape information used to generate the three-dimensional model data (namely, the shape information such as the parameter set by the terminal user) in the storage apparatus 22. When the storage apparatus 22 stores the shape information, the data generation unit 213 may generate the three-dimensional model data based on the shape information stored in the storage apparatus 22. The data generation unit 213 may regenerate (namely, restore) the generated three-dimensional model data based on the shape information stored in the storage apparatus 22. The data generation unit 213 may generate, based on the restored three-dimensional model data, new three-dimensional model data representing a new three-dimensional structural object that is obtained by adding a new part (for example, a screw part and the like) to the three-dimensional structural object represented by the restored three-dimensional model data. Namely, the data generation unit 213 may modify the restored three-dimensional model data.

Moreover, the data generation unit 213 may store the set shape information in the storage apparatus 22 after it is determined that the operation of setting the shape information using the setting GUI 9 has been completed. The data generation unit 213 may also store the shape information that has been set up to that time (the shape information in the process of being set) in the storage apparatus 22 before it is determined that the operation of setting the shape information using the setting GUI 9 has been completed. For example, the data generation unit 213 may store the shape information that has been set up to that time (the shape information in the process of being set) in the storage apparatus 22 when the terminal user wants to temporarily suspend the operation of setting the shape information using the setting GUI 9, although the operation of setting the shape information using the setting GUI 9 has not been completed. In this case, when the terminal user resumes setting the shape information, the display control unit 211 may display on the display apparatus 35 the setting GUI 9 used by the terminal user to continue setting the shape information from where he suspended based on the shape information in the process of being set.

Then, the data generation unit 213 transmits the three-dimensional model data generated at the step S16 to the build apparatus 1 by using the communication apparatus 23. Note that the data generation unit 213 may transmit the three-dimensional model data to the build apparatus 1 based on an instruction from the server user (alternatively, the terminal user or the build user). Alternatively, the data generation unit 213 may automatically transmit the three-dimensional model data to the build apparatus 1 without waiting for the instruction from the server user (alternatively, the terminal user or the modeling user). The control apparatus 17 of the build apparatus 1 receives (obtains) the three-dimensional model data transmitted from the data generation server 2 by using the communication apparatus 18. Then, the control apparatus 17 generates the build control information that specifies a detail of the operation of the build apparatus 1 based on the three-dimensional model data (a step S18). Specifically, the control apparatus 17 generates, based on the three-dimensional model data, the build control information that specifies a detail of the operation of the build apparatus 1 to build the three-dimensional structural object represented by the three-dimensional model data (namely, the three-dimensional structural object having a shape defined by the shape information set by the terminal user). Namely, the control apparatus 17 generates, based on the three-dimensional model data, the build control information that allows the build apparatus 1 to operate to build the three-dimensional structural object represented by the three-dimensional model data.

The build control information may include path information that indicates a moving trajectory of the processing head 121 relative to the stage 131. As the processing head 121 moves, an irradiation position of the processing light EL from the irradiation optical system 1211 and a supply position of the build materials M from the material nozzle 1212 also move. Thus, the path information may be regarded to indicate a movement trajectory of each of the irradiation position of the processing light EL and the supply position of the build materials M relative to to the stage 131.

Then, the control apparatus 17 controls the operation of the build apparatus 1 to build the three-dimensional structural object (namely, the three-dimensional structural object having the shape set by the terminal user) based on the build control information (the step S18). As a result, the three-dimensional structural obj ect having the shape set by the terminal user is built.

Note that a control information generation apparatus that is different from the control apparatus 17 of the build apparatus 1 may generate the build control information. In this case, the data generation unit 213 may transmit the three-dimensional model data generated at the step S16 to the control information generation apparatus. The control information generation apparatus 17 may receive (obtain) the three-dimensional model data transmitted from the data generation server 2. Then, the control information generation apparatus may generate the build control information based on the three-dimensional model data. Then, the control information generation apparatus may transmit the generated build control information to the build apparatus 1 (the control apparatus 17). Then, the control apparatus 17 may control the operation of the build apparatus 1 based on the build control information generated by the control information generation apparatus.

### (3) Effect of Build System SYS

As described above, in the build system SYS in the present example embodiment, the terminal user can generate the three-dimensional model data by setting the value of the parameter and / or selecting the icon that defines the shape of the three-dimensional structural object. Namely, the terminal user can generate the three-dimensional model data without using a software that requires highly specialized knowledge such as a three-dimensional CAD (Computer Aided Design) software. Namely, the data generation server 2 is capable of appropriately assisting the user to generate the three-dimensional model data by providing the setting GUI 9 to the terminal user.

Especially, the data generation server 2 provides, to the terminal user, the setting GUI 9 according to the type of the three-dimensional structural object so that the terminal user can set appropriate shape information according to the type of the three-dimensional structural object to be additively built by the build apparatus 1. Thus, the terminal user can generate the three-dimensional model data regardless of the type of the three-dimensional structural object. For example, the terminal user can generate the three-dimensional model data representing the three-dimensional model of the three-dimensional structural object including at least one of the pipe and the plate.

Moreover, the terminal user can intuitively generate the three-dimensional model data because the three-dimensional model based on the shape information currently set by the terminal user is displayed on the output screen 92 included in the setting GUI 9.

### (4) Modified Example

As described above, the terminal user may use the setting GUI 9 to set the shape information related to the shape of the three-dimensional structural object as desired by the terminal user. Specifically, the terminal user may use the parameter setting GUI 911 to set the parameter that defines the shape of the three-dimensional structural object to be the terminal user's desired setting values. The terminal user may use the icon selection GUI 912 to set the shape of the three-dimensional structural object to be the terminal users desired shape (namely, the specific shape associated with the icon selected by the terminal user).

On the other hand, depending on the setting value of the shape information, there is a possibility that the three-dimensional structural object having the shape defined by the shape information set by the terminal user does not satisfy a predetermined shape conditions related to the shape of the three-dimensional structural object. Such a condition that "the shape of the three-dimensional structural object (namely, the shape of the three-dimensional model represented by the three-dimensional model data generated based on the shape information) is a shape that can be built by the build apparatus 1 is one example of the predetermined shape condition. Thus, when the three-dimensional structural object having the shape defined by the shape information does not satisfy the shape condition, there is a possibility that the build apparatus 1 is not capable of building the three-dimensional structural object having the shape defined by the shape information. Note that least one of a reason that at least a part of the build object constituting the three-dimensional structural object interferes with the build apparatus 1 in the process of building the three-dimensional structural object, a reason that at least a part of the build object constituting the three-dimensional structural object prevents the build apparatus 1 from irradiating a desired irradiation position with the processing light EL in the process of building the three-dimensional structural object, and a reason that at least a part of the build object constituting the three-dimensional structural object prevents the build apparatus 1 from supply the build materials M to a desired supply position in the process of building the three-dimensional structural object is one example of a reason why the build apparatus 1 is not capable of building the three-dimensional structural object. All of the reasons are related to at least the build apparatus 1. Thus, the shape condition may be regarded as an example of a constraint condition related to the build apparatus 1.

Moreover, depending on the setting value of the shape information, there is a possibility that the three-dimensional structural object having the shape defined by the shape information set by the terminal user does not satisfy a predetermined strength condition related to a strength of the three-dimensional structural object. Such a condition that "the strength of the three-dimensional structural object built to have the shape defined by the shape information is higher than a predetermined strength which the three-dimensional structural object should have is one example of the strength condition. Thus, when the three-dimensional structural object having the shape defined by the shape information does not satisfy the strength condition, there is a possibility that the strength of the built three-dimensional structural object is lower than the predetermined strength which the three-dimensional structural object should have, although the build apparatus 1 is capable of building the three-dimensional structural object. Namely, there is a possibility the strength of the three-dimensional structural object is insufficient. Note that a reason that the shape of the three-dimensional structural object is a shape by which the strength of the three-dimensional structural object cannot be maintained is one example of a reason why the strength of the three-dimensional structural object is insufficient. This reason is a reason related to at least the three-dimensional structural object. Thus, the strength condition may be regarded as an example of a constraint condition related to the three-dimensional structural object.

Moreover, depending on the setting value of the shape information, there is a possibility that the three-dimensional structural object having the shape defined by the shape information set by the terminal user does not satisfy a predetermined quality conditions related to a quality of the three-dimensional structural object. Here, the quality of the three-dimensional structural object may include a processing quality of the three-dimensional structural object. When the processing quality of the three-dimensional structural object is not relatively good, an error between a characteristic (for example, at least one of size, shape, and weight) of the three-dimensional structural object and an expected characteristic is larger, compared to a case where the processing quality of the three-dimensional structural object is relatively good. Such a condition that "the quality of the three-dimensional structural object that is built to have the shape defined by the shape information is higher than a predetermined quality which the three-dimensional structural object should have is one example of the quality condition. Thus, when the three-dimensional structural object having the shape defined by the shape information does not satisfy the quality condition, there is a possibility that the quality of the built three-dimensional structural object is lower than the predetermined quality which the three-dimensional structural object should have, although the build apparatus 1 is capable of building the three-dimensional structural object. Namely, there is a possibility that the quality of the three-dimensional structural object is lower than expected. A reason that the shape of the three-dimensional structural object is a shape by which the processing quality of the three-dimensional structural object cannot be maintained is one example of a reason why the quality of the three-dimensional structural object is lower. This reason is a reason related to at least the three-dimensional structural object. Thus, the quality condition may be regarded as an example of a constraint condition related to the three-dimensional structural object.

Therefore, in the modified example, the data generation server 2 may assist the terminal user setting the shape information in a period during which the terminal user sets the shape information so that the three-dimensional structural object having the shape defined by the shape information properly satisfies at least one of the shape condition, the strength condition, and the quality condition. Specifically, the data generation server 2 may perform a first assist processing for present, to the terminal user, allowable shape information related to an allowable shape, wherein the allowable shape is a shape which the terminal user is allowed to set as the shape of the three-dimensional structural object. Furthermore, in addition to or instead of the first assist processing, the data generation server 2 may perform a second assist processing for prompting the terminal user to set the shape information again when the three-dimensional structural object having the shape defined by the shape information does not satisfy at least one of the shape condition, the strength condition, and the quality condition. Next, the first assist processing and the second support processes are described below in order.

### (4-1) First Assist Processing

Firstly, the first support processing for presenting, to the terminal user, the allowable shape information related to the allowable shape, wherein the allowable shape is the shape which the terminal user is allowed to set as the shape of the three-dimensional structural object, will be described.

The allowable shape corresponds to a shape of the three-dimensional structural object in a state that satisfies at least one of the shape condition, the strength condition, and the quality condition. Thus, the allowable shape may include a shape of the three-dimensional structural object that can be built by the build apparatus 1. The allowable shape may include a shape of the three-dimensional structural object having a strength that is equal to or higher than the predetermined strength. The allowable shape may include a shape of the three-dimensional structural object having a quality that is equal to or higher than the predetermined quality.

The allowable shape is determined based on at least one of the shape condition, the strength condition, and the quality condition. Thus, the allowable shape information may be determined in advance based on one of the shape condition, the strength condition, and the quality condition. Alternatively, there is a possibility that the allowable shape changes due to a change of the shape of the three-dimensional structural object in the process of the terminal user setting the shape information. Therefore, the allowable shape information may be generated or changed based on the shape information that has been set by the terminal user and one of the shape condition, the strength condition, and the quality condition. In both cases, the allowable shape easily calculatable from at least one of the shape condition, the strength condition, and the quality condition (furthermore, the shape information that has been set by the terminal user), because the allowable shape is determined based on the characteristic of the build apparatus 1 and a characteristic of the three-dimensional structural object.

As described above, the terminal user sets the shape information on the setting GUI 9 (especially, the input screen 91). Thus, the data generation server 2 (especially, the display control unit 211, the same is applied to the below-described description) may present, to the terminal user, the allowable shape information related to the allowable shape on the setting GUI 9 (especially, the input screen 91).

For example, as described above, the terminal user uses the parameter setting GUI 911 to set the value of the parameter that defines the shape of the three-dimensional structural object. In this case, the allowable shape information may include allowable parameter information indicating at least one of candidate value and range of the parameter which the terminal user is allowed to set. For example, the data generation server 2 may control the terminal apparatus 3 to display the setting GUI 9 that includes the allowable parameter information indicating at least one of the candidate value and range of the parameter that defines the shape of the three-dimensional structural object satisfying the shape condition. Specifically, the data generation server 2 may control the terminal apparatus 3 to display the setting GUI 9 including the allowable parameter information indicating at least one of the candidate value and range of shape parameter that defines the shape of the three-dimensional structural object that can be built by the build apparatus 1. The data generation server 2 may control the terminal apparatus 3 to display the setting GUI 9 that includes the allowable parameter information indicating at least one of the candidate value and range of the shape parameter that defines the shape of the three-dimensional structural object satisfying the strength condition. Specifically, the data generation server 2 may control the terminal apparatus 3 to display the setting GUI 9 including the allowable parameter information indicating at least one of the candidate value and range of the shape parameter that defines the shape of the three-dimensional structural object having the strength equal to or higher than the predetermined strength. The data generation server 2 may control the terminal apparatus 3 to display the setting GUI 9 including the allowable parameter information indicating at least one of the candidate value and range of the shape parameter that defines the shape of the three-dimensional structural object satisfying the quality condition. Specifically, the data generation server 2 may control the terminal apparatus 3 to display the setting GUI 9 including the allowable parameter information indicating at least one of the candidate value and range of the shape parameter that defines the shape of the three-dimensional structural object having the quality equal to or higher than the predetermined quality.

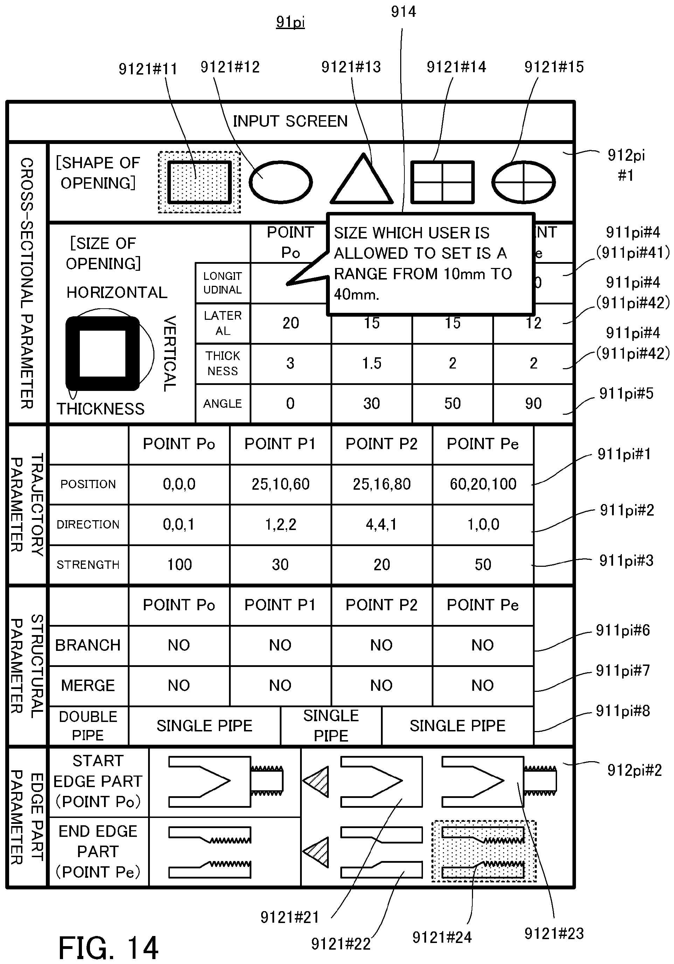

FIG. 14 illustrates an example of the setting GUI 9 including the allowable parameter information. As illustrated in FIG. 14, the setting GUI 9 may include an allowable parameter window 914 indicating at least one of the candidate value and range of the parameter which the terminal user is allowed to set. In an example illustrated in FIG. 14, the allowable parameter window 914 indicating by a text message the value that is allowed to be set as the size of the cross-section of the pipe along the first direction at the start point Po is from 10 mm to 40 mm is displayed. The allowable parameter window 914 is one example of a display object for presenting at least one of the candidate value and range of parameter which the terminal user is allowed to set, to the terminal user in such a manner that it is allowed to be set.

For example, as described above, the terminal user uses the icon selection GUI 912 to set the shape information related to the shape of the three-dimensional structural object. In this case, the allowable shape information may include allowable icon information indicating the icon which the terminal user is allowed to select. For example, the data generation server 2 may control the terminal apparatus 3 to display the setting GUI 9 that includes the allowable icon information indicating the icon associated with the shape of the three-dimensional structural object satisfying the shape condition. Specifically, the data generation server 2 may control the terminal apparatus 3 to display the setting GUI 9 including the allowable icon information indicating the icon associated with the shape of the three-dimensional structural object that can be built by the build apparatus 1. The data generation server 2 may control the terminal apparatus 3 to display the setting GUI 9 including the allowable icon information indicating the icon associated with the shape of the three-dimensional structural object satisfying the strength condition. Specifically, the data generation server 2 may control the terminal apparatus 3 to display the setting GUI 9 including the allowable icon information indicating the icon associated with the shape of the three-dimensional structural object having the strength equal to or higher than the predetermined strength. The data generation server 2 may control the terminal apparatus 3 to display the setting GUI 9 including the allowable icon information indicating the icon associated with the shape of the three-dimensional structural object satisfying the quality condition. Specifically, the data generation server 2 may control the terminal apparatus 3 to display the setting GUI 9 including the allowable icon information indicating the icon associated with the shape of the three-dimensional structural object having the quality equal to or higher than the predetermined quality.

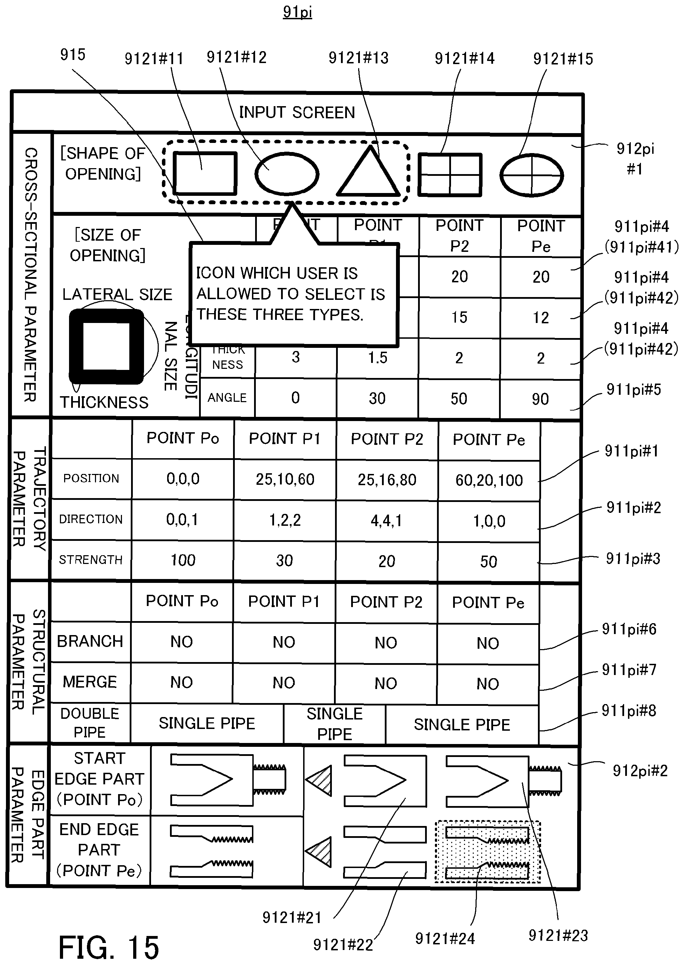

FIG. 15 illustrates an example of the setting GUI 9 including the allowable icon information. As illustrated in FIG. 15, the setting GUI 9 may include an allowable icon window 915 indicating the icon which the terminal user is allowed to be select. In an example illustrated in FIG. 15, the allowable icon window 915 indicating by a text message that the terminal user is allowed to select the icons 9121#11 to 9121#13 (further implicitly indicating that the terminal user is not allowed to select the icons 9121#14 to 9121#15) is displayed. The allowable icon window 915 is one example of a display object for presenting the icon which the terminal user is allowed to select, to the terminal user in such a manner that it is allowed to be select.

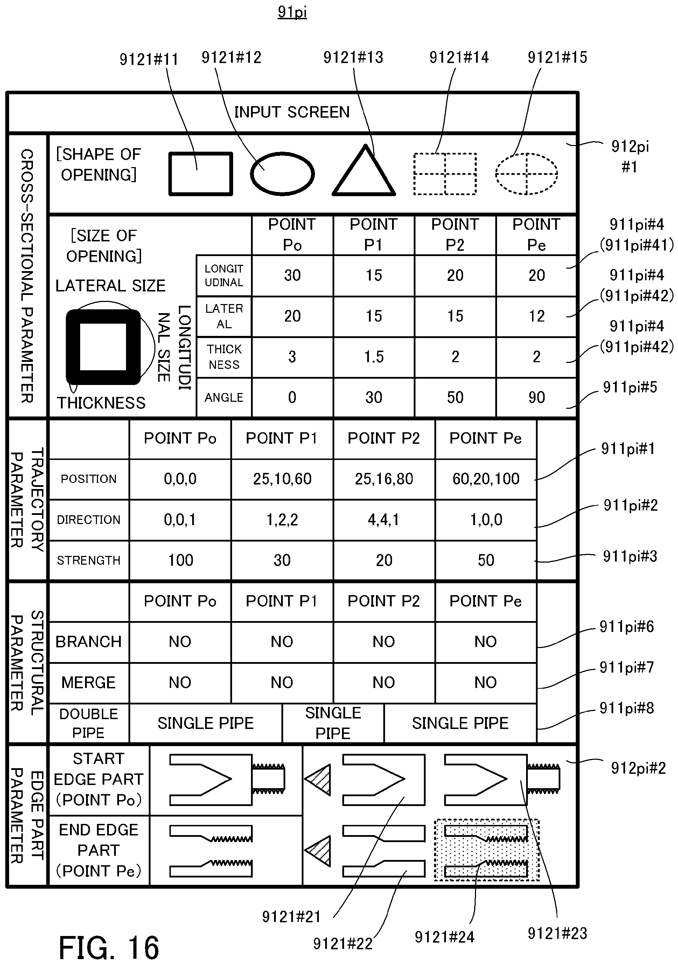

FIG. 16 illustrates another example of the setting GUI 9 including the allowable icon information. As illustrated in FIG. 16, the setting GUI 9 may present the icon which the terminal user is allowed to select to the terminal user by making a display aspect of the icon which the terminal user is allowed to select more prominent than a display aspect of the icon which the terminal user is not allowed to select. Namely, in an example illustrated in FIG. 16, although a display object directly indicating the allowable icon information is not displayed, information related to the icon which the terminal user is allowed to select (namely, the allowable icon information) is presented to the terminal user by controlling the display aspect of the icon.

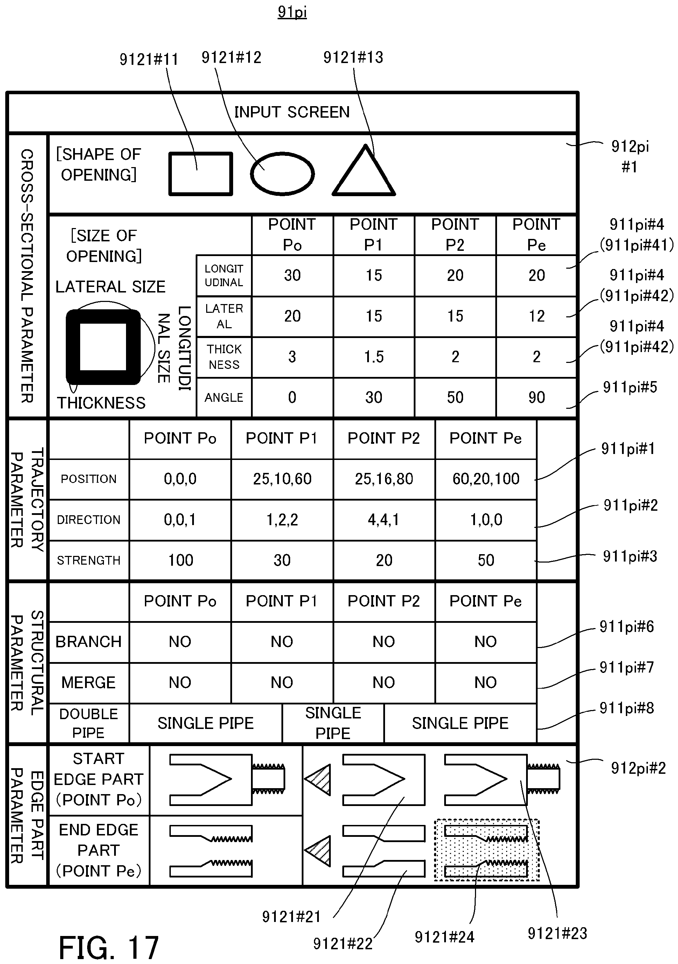

FIG. 17 illustrates another example of the setting GUI 9 including the allowable icon information. As illustrated in FIG. 17, the setting GUI 9 may present the icon which the terminal user is allowed to select to the terminal user by displaying the icon which the terminal user is allowed to select and not displaying the icon which the terminal user is not allowed to select. Namely, in an example illustrated in FIG. 17, although the display object directly indicating the allowable icon information is not displayed, the information related to the icon which the terminal user is allowed to select (namely, the allowable icon information) is presented to the terminal user by whether or not the icon is displayed.

As illustrated in FIG. 16 and FIG. 17, an operation of presenting the allowable icon information to the terminal user may include not only an operation of presenting the display object directly indicating the allowable icon information to the terminal user, but also an operation of presenting the setting GUI 9 indirectly or implicitly indicating the allowable icon information. The operation of presenting the allowable icon information to the terminal user may include not only an operation of presenting the allowable icon information directly to the terminal user, but also an operation of presenting the allowable icon information indirectly or implicitly to the terminal user. Similarly, an operation of presenting the allowable parameter information (alternatively, the allowable shape information) to the terminal user may include not only an operation of presenting the display object directly indicating the allowable parameter information (alternatively, the allowable shape information) to the terminal user, but also an operation of presenting the setting GUI 9 indirectly or implicitly indicating the allowable parameter information (alternatively, the allowable shape information) to the terminal user. The operation of presenting the allowable parameter information (alternatively, the allowable shape information) to the terminal user may include not only an operation of presenting the allowable parameter information (or allowable shape information) directly to the terminal user, but also an operation of presenting the allowable parameter information (or allowable shape information) indirectly or implicitly to the terminal user.

A presentation aspect (a display aspect) of the allowable shape information may be selected by the terminal user. For example, the setting GUI 9 including the allowable parameter information displayed in the display aspect selected by the terminal user may be displayed. For example, the setting GUI 9 including the allowable icon information displayed in the display aspect selected by the terminal user may be displayed. As one example, when the terminal user desires the display of the allowable icon information in the display aspect illustrated in FIG. 15, the setting GUI 9 including the allowable icon information displayed in the display aspect illustrated in FIG. 15 may be displayed. As one example, when the terminal user desires the display of the allowable icon information in the display aspect illustrated in FIG. 16, the setting GUI 9 including the allowable icon information displayed in the display aspect illustrated in FIG. 16 may be displayed. As one example, when the terminal user desires the display of the allowable icon information in the display aspect illustrated in FIG. 17, the setting GUI 9 including the allowable icon information displayed in the display aspect illustrated in FIG. 17 may be displayed.

A presence or absence of the presentation (a presence or absence of the display) of the allowable shape information may be designated by the terminal user. For example, when the terminal user does not desire the display of the allowable shape information, the setting GUI 9 that does not include the allowable shape information may be displayed. For example, when the terminal user desires the display of the allowable shape information, the setting GUI 9 that includes the allowable shape information may be displayed.

When the setting GUI 9 including the allowable shape information is displayed, the terminal user can not only recognize the allowable shape, but may also recognize that a shape different from the allowable shape is a shape that does not satisfy at least one of the shape condition, the strength condition and the quality condition (hereinafter, it is referred to as a "disallowed shape") based on the allowable shape information. For example, when the setting GUI 9 including the allowable parameter information is displayed, the terminal user can not only recognize at least one of the candidate value and range of parameter which the terminal user is allowed to set, but also recognize at least one of the value and range of the parameters which the terminal user is not allowed to set (namely, at least one of the value and range of the parameter defining the shape that does not satisfy at least one of the shape condition, the strength condition, and the quality condition) based on the allowable parameter information. For example, when the setting GUI 9 including the allowable icon information is displayed, the terminal user can not only recognize not only the icon which the user is allowed to select, but also recognize the icon which the terminal user is not allowed to select (namely, the icon associated with the shape that does not satisfy at least one of the shape condition, the strength condition, and the quality condition) based on the allowable icon information. Thus, the operation of presenting the allowable shape information to the terminal user may be regarded to be substantially equivalent to an operation of presenting disallowed shape information related to the disallowed shape to the terminal user.

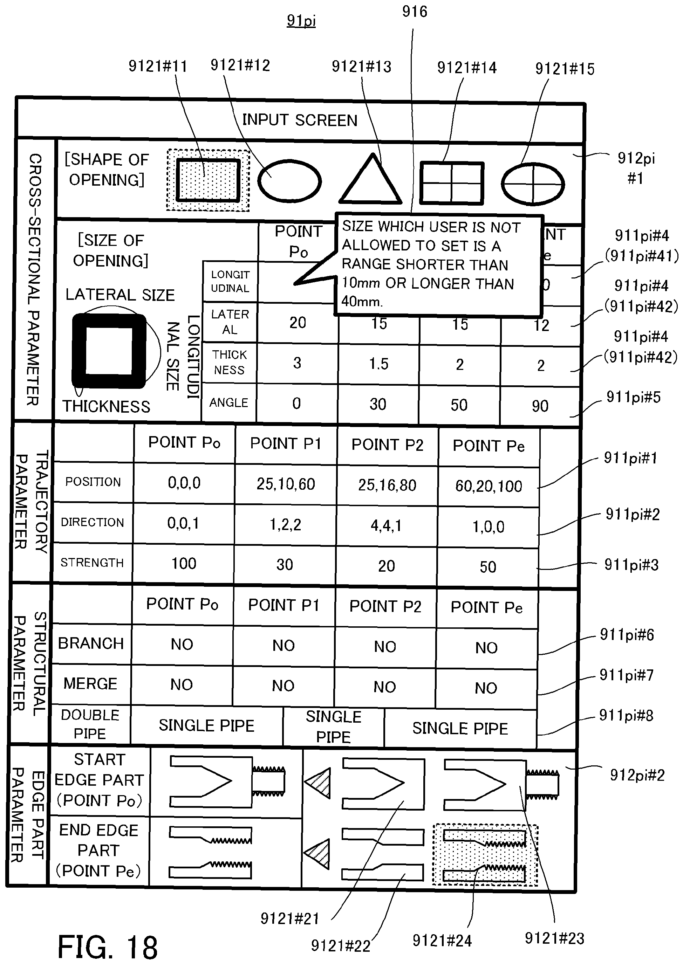

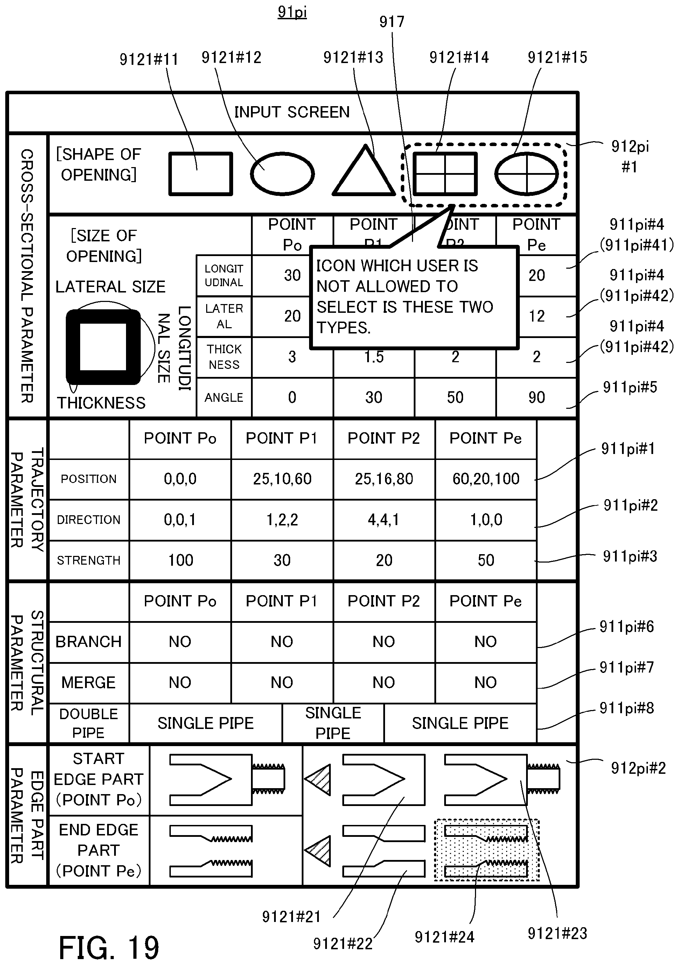

Alternatively, the data generation server 2 may actively present the disallowed shape information to the terminal user. For example, as illustrated in FIG. 18, the data generation server 2 may display the setting GUI 9 that includes a disallowed parameter window 916 indicating at least one of the value and range of the parameter which the terminal user is not allowed to set. The disallowed parameter window 916 is an example of a display object for presenting at least one of the candidate value and range of parameter which the terminal user is not allowed to set, to the terminal user in such a manner that it is not allowed to be set. For example, as illustrated in FIG. 19, the data generation server 2 may display the setting GUI 9 including a disallowed icon window 917 indicating the icon which the termina user is not allowed to select. The disallowed icon window 917 is an example of a display object for presenting the icon which the terminal user is not allowed to select, to the terminal user in such a manner that it is not allowed to be select. A presentation aspect (a display aspect) of the disallowed shape information may be selected by the terminal user, as with the presentation aspect (a display aspect) of the allowable shape information. Moreover, a presence or absence of the presentation (a presence or absence of the display) of the disallowed shape information may be designated by the terminal user, as with the presence or absence of the presentation (the presence or absence of the display) of the allowable shape information.

When the above-described first assist processing is performed, the terminal user can easily recognize the allowable shape. Thus, the terminal user can set the shape information so that the three-dimensional structural object having the shape defined by the shape information set by the terminal user properly satisfies at least one of the shape condition, the strength condition, and the quality condition. As a result, there is a lower possibility that the shape information is set again, compared to a case where it is found out only after the terminal user has finished setting the shape information that the three-dimensional structural object having the shape defined by the shape information set by the terminal user does not properly satisfy at least one of the shape condition, the strength condition, and the quality condition. Thus, the terminal user can set the shape information efficiently.

### (4-2) Second Assist Processing

Next, the second assist processing for prompting the terminal user to set the shape information again when the three-dimensional structural object having the shape defined by the shape information does not satisfy at least one of the shape condition, the strength condition, and the quality condition.

As described above, the terminal user sets the shape information on the setting GUI 9 (especially, the input screen 91). Thus, the data generation server 2 (especially, the display control unit 211, the same is applied to the below-described description) may perform a processing for prompting the terminal user to set the shape information again on the setting GUI 9 (especially, the input screen 91).

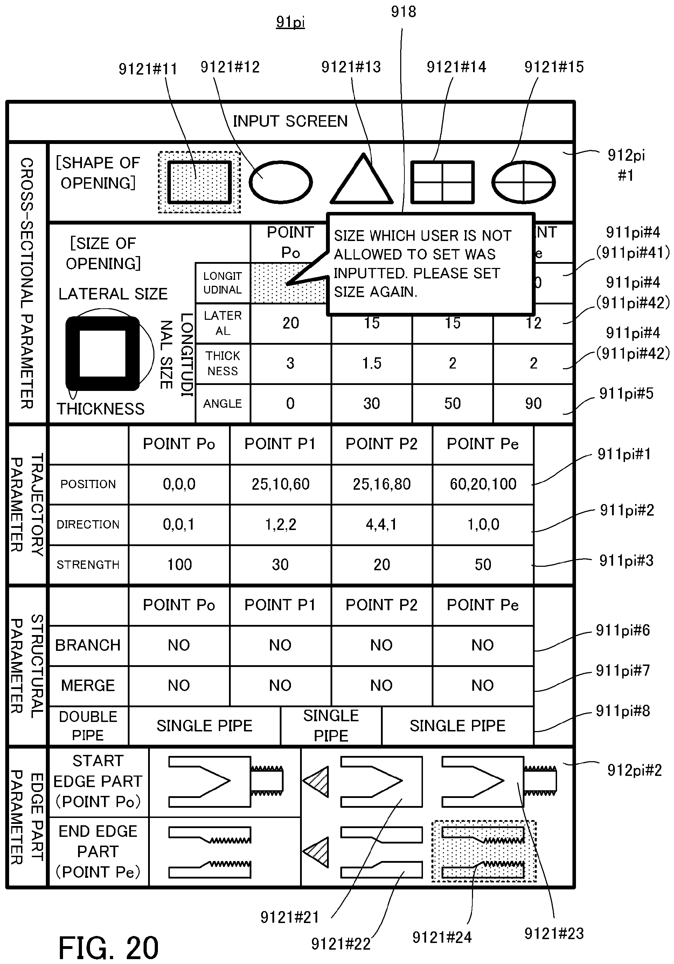

For example, as described above, the terminal user uses the parameter setting GUI 911 to set the value of the parameter that defines the shape of the three-dimensional structural object. In this case, when the terminal user sets the value of the parameter which the terminal user is not allowed to set (namely, the value of the parameter defining the shape that does not satisfy at least one of the shape condition, the strength condition, and the quality condition), the data generation server 2 may perform the process for prompting the terminal user to set the value of the parameter again on the setting GUI 9. For example, as illustrated in FIG. 20, the data generation server 2 may display on the setting GUI 9, a message window 918 that prompts the terminal user to set the value of the parameter again because the value of the parameter which the terminal user is not allowed to set has been set. In this case, as in the first assist processing, the allowable parameter information may be presented to the terminal user accordingly.

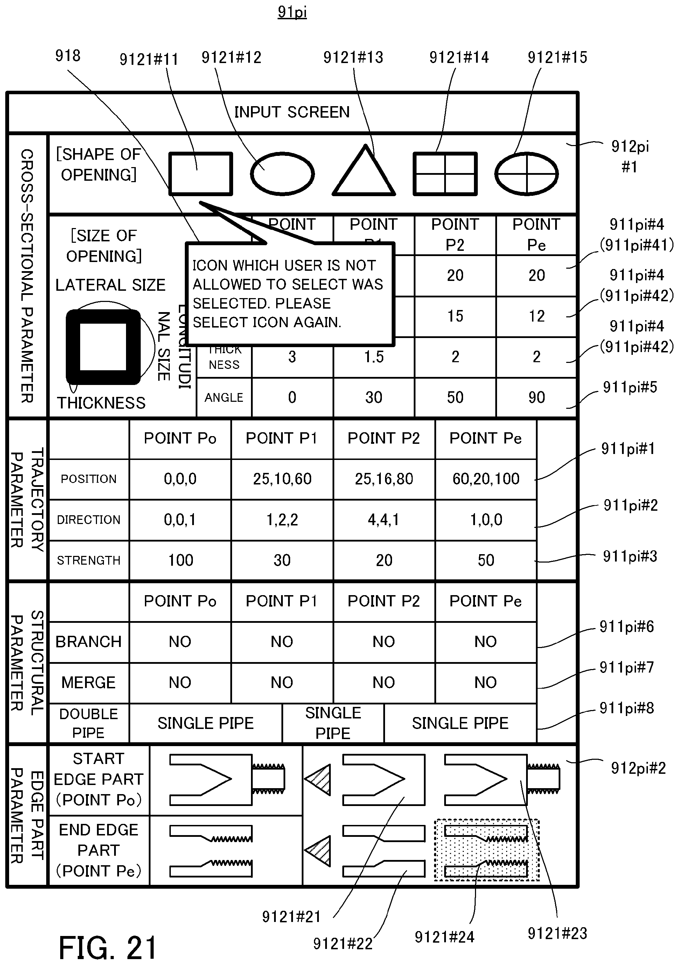

For example, as described above, the terminal user uses the icon selection GUI 912 to set the shape information related to the shape of the three-dimensional structural object. In this case, when the terminal user selects the icon which the terminal user is not allowed to select (namely, the icon associated with the shape that does not satisfy at least one of the shape condition, the strength condition, and the quality condition), the data generation server 2 may perform the process for prompting the terminal user to select the icon again on the setting GUI 9. For example, as illustrated in FIG. 21, the data generation server 2 may display, on the setting GUI 9, the message window 918 that prompts the terminal user to select the icon again because the icon which the terminal user is not allowed to select has been selected. In this case, as in the first assist processing, the allowable icon information may be presented to the terminal user accordingly.

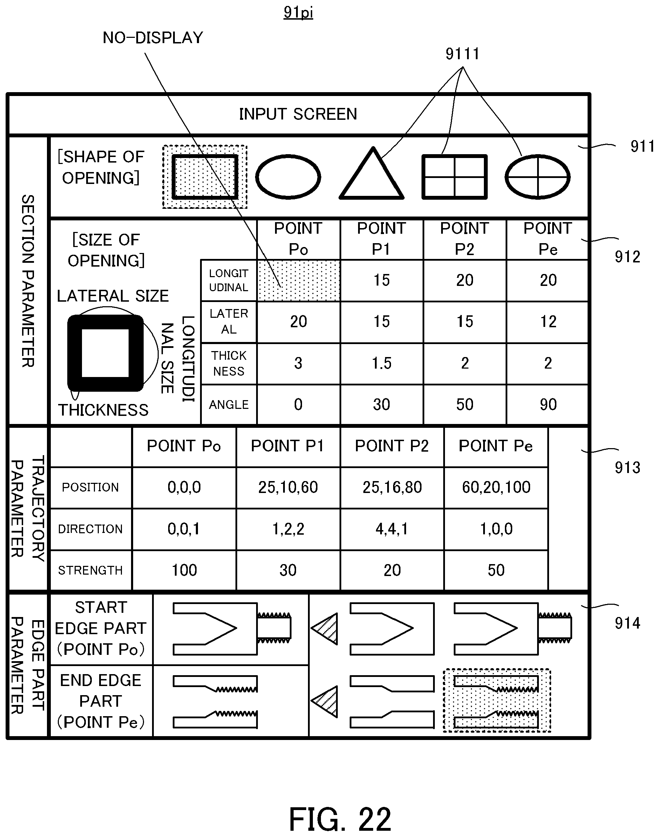

Alternatively, in addition to or instead of displaying the message window 918, the data generation server 2 may display the setting GUI 9 so that the value of the parameter which the terminal user is not allowed to set cannot be set (namely, cannot be inputted) on the setting GUI 9. For example, as illustrated in FIG. 22, when the value of the parameter which the terminal user is not allowed to set is inputted, the value of the parameter inputted by the terminal user may not be displayed on the setting GUI 9. In this case, the terminal user recognizes that the inputted value of the parameter is not displayed (namely, the setting of the value of the parameter is not completed) and thus, recognizes that the value of the parameter needs to be set again.

Similarly, in addition to or instead of displaying the message window 918, the data generation server 2 may display the setting GUI 9 so that the terminal user cannot select the icon which the terminal user is not allowed to select on the setting GUI 9. In this case, the terminal user recognizes that the icon that should have been selected is not selected (namely, the selection of the icon is not completed) and thus, recognizes that the icon needs to be selected again.

When the above-described second assist processing is performed, the terminal user can easily determine whether or not the shape information set by the terminal user defines the shape that does not satisfy at least one of the shape condition, the strength condition, and the quality condition. Thus, the terminal user can set the shape information so that the three-dimensional structural object having the shape defined by the shape information set by the terminal user properly satisfies at least one of the shape condition, the strength condition, and the quality condition. As a result, there is a lower possibility that the shape information is set again, compared to a case where it is found out only after the terminal user has finished setting the shape information that the three-dimensional structural object having the shape defined by the shape information set by the terminal user does not properly satisfy at least one of the shape condition, the strength condition, and the quality condition. Thus, the terminal user can set the shape information efficiently.

### (4-3) Other Modified Example

The build apparatus 1 may include a display apparatus that is configured to display the setting GUI 9 (namely, an apparatus that is configured to serve as the display apparatus 35 of the terminal apparatus 3). The build apparatus 1 may include an input apparatus that is used by the build user to operate the setting GUI 9 (namely, an apparatus that is configured to serve as the input apparatus 34 of the terminal apparatus 3). Namely, the build apparatus 1 may include at least a part of the terminal apparatus 3. In this case, the build user may set the shape information by using the setting GUI 9. Furthermore, in this case, the control apparatus 17 of the build apparatus 1 may generate the three-dimensional model data based on the shape information set by the build user. Namely, the control apparatus 17 may include at least a part of the data generation server 2.

In the above-described description, the display apparatus 35 of the terminal apparatus 3 displays the setting GUI 9 including both of the input screen 91 and the output screen 92. However, the display apparatus 35 may display either one of the input screen 91 and the output screen 92 and may not display the other one of the input screen 91 and the output screen 92. Namely, a display mode of the display apparatus 35 may be switched between a mode in which both of the input screen 91 and the output screen 92 are displayed and a mode in which either one of the input screen 91 and the output screen 92 is displayed. In this case, the display mode of the display apparatus 35 may be switched based on the terminal user's instruction.

In the above-described description, the build apparatus 1 melts the build material M by irradiating the build material M with the processing light EL. However, the build apparatus 1 may melts the build material by irradiating the build material M with any energy beam. At least one of a charged particle beam, an electromagnetic wave and the like is one example of any energy beam. At least one of an electron beam, an ion beam and the like is one example of the charged particle beam.

In the above-described description, the build apparatus 1 builds the three-dimensional structural object by performing the additive processing based on the Laser Metal Deposition. However, the build apparatus 1 may build the three-dimensional structural object by performing the additive processing based on another method by which the three-dimensional structural object is formable. Alternatively, the build apparatus 1 may build the three-dimensional structural object by performing a removal processing, in addition to or instead of performing the additive processing. The build apparatus 1 may build the three-dimensional structural object by performing a machining processing, in addition to or instead of performing at least one of the additive processing and the removal processing.

At least a part of the features of each example embodiment described above may be properly combined with at least another part of the features of each example embodiment described above. A part of the features of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a data generation method, a build contract method, a data generation apparatus, a display apparatus, a build method, a computer program and a recording medium, which involve such changes, are also intended to be within the technical scope of the present invention.

### Description of Reference Codes

- SYS: build system
- 1: build apparatus
- 2: data generation server
- 21: arithmetic apparatus
- 211: display control unit
- 212: information obtaining unit
- 213: data generation unit
- 3: terminal apparatus
- 311: display control unit
- 312: information obtaining unit
- 9: setting GUI
- 91: input screen
- 911: parameter setting GUI
- 912: icon selection GUI
- 92: output screen

## Claims

1. A data generation method of generating model data representing a three-dimensional model of an object that is additively built by a build apparatus, wherein
the data generation method comprises:
displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen;
displaying, on the display screen of the display apparatus, a display for prompting the user to set the value of the parameter again, when the three-dimensional model based on the value of the parameter set by the user using the input screen has a shape that cannot be built by the build apparatus; and
generating the model data based on the value of the parameter set by the user again.

2. A data generation method of generating model data representing a three-dimensional model of a pipe that is an object additively built by a build apparatus, wherein
the data generation method comprises:
displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and
generating the model data based on the icon selected by the user,
the user is allowed to select icons related to a plurality of cross-sections of the pipe.

3. The data generation method according to claim 2, wherein
the icon defines at least one of a shape of a cross-section of an inner surface of at least a part of the pipe and a shape of a cross-section of an outer surface of at least a part of the pipe.

4. A data generation method of generating model data representing a three-dimensional model of an object that is additively built by a build apparatus, wherein
the data generation method comprises:
displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen;
displaying, on the display screen of the display apparatus, a display for prompting the user to set the value of the parameter again, when a strength of the object based on the shape of the object represented by the value of the parameter set by the user does not satisfy a predetermined condition; and
generating the model data based on the value of the parameter set by the user again.

5. A data generation method of generating model data representing a three-dimensional model of an object that is additively built by a build apparatus, wherein
the data generation method comprises:
displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen;
displaying, on the display screen of the display apparatus, a display for prompting the user to set the value of the parameter again, when a quality of the object based on the shape of the object represented by the value of the parameter set by the user does not satisfy a predetermined condition; and
generating the model data based on the value of the parameter set by the user again.

6. A data generation method of generating model data representing a three-dimensional model of a pipe that is an object additively built by a build apparatus, wherein
the data generation method comprises:
displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and
generating the model data based on the value of the parameter set by the user,
the user is allowed to set the values of the parameters related to a plurality of cross-sections of the pipe.

7. The data generation method according to claim 1, 4 or 5, wherein
the object includes a pipe.

8. The data generation method according to claim 6 or 7, wherein
the parameter defines at least one of an inner diameter of at least a part of the pipe, a shape of a cross-section of an inner surface of at least a part of the pipe, a thickness of a wall of at least a part of the pipe, a shape of a cross-section of an outer surface of at least a part of the pipe, and an outer diameter of at least a part of the pipe.

9. A data generation method of generating model data representing a three-dimensional model of a plate that is an object additively built by a build apparatus, wherein
the data generation method comprises:
displaying a display screen on a display apparatus, the display screen includes an input screen and an output screen, the input screen is operable by a user to set a value of a parameter defining a shape of the plate, a three-dimensional model based on the value of the parameter set by the user using the input screen is displayable on the output screen; and
generating the model data based on the value of the parameter set by the user,
the user is allowed to set the values of the parameters for a plurality of points of the plate.

10. The data generation method according to claim 1, 4, 5 or 7, wherein
the object includes a plate.

11. The data generation method according to claim 9 or 10, wherein
the parameter includes at least one of a position of at least a part of the plate, a depth of a hole in at least a part of the plate, a diameter of a hole in at least a part of the plate, and a shape of an inner surface facing a hole in the at least a part of the plate.

12. The data generation method according to any one of claims 9 to 11, wherein
the parameter defines a shape of a rib part extending from a first part of the plate to a second part of the plate.

13. The data generation method according to any one of claims 9 to 12, wherein
the parameter defines a shape of a base part of the plate.

14. A data generation method of generating model data representing a three-dimensional model of a plate that is an object additively built by a build apparatus, wherein
the data generation method comprises:
displaying a display screen on a display apparatus, the display screen includes an input screen and an output screen, the input screen is used by a user to select an icon defining a shape of the plate, a three-dimensional model based on the icon selected by the user using the input screen is displayable on the output screen; and
generating the model data based on the icon selected by the user,
the user is allowed to select icons for a plurality of points of the plate.

15. The data generation method according to claim 14, wherein
the icon defines a shape of a base part of the plate.

16. A data generation method of generating model data representing a three-dimensional model of an obj ect, wherein
the data generation method comprises:
controlling an input and output apparatus, the input and output apparatus includes an input unit and an output unit, the input unit is operable by a user to set information related to a shape, model information based on the information related to the shape set by the user using the input unit is displayable by the output unit;
controlling the input and output apparatus to perform a process for prompting the user to set the information related to the shape again, when the information related to the shape set by the user does not satisfy a predetermined condition; and
generating the model data based on the information related to the shape set by the user again,
the predetermined condition includes at least one of a condition related to a build apparatus configured to additively build the object and a condition related to a build object built based on the information related to the shape.

17. A data generation method of generating model data representing a three-dimensional model of an obj ect, wherein
the data generation method comprises:
controlling an input and output apparatus, the input and output apparatus includes an input unit and an output unit, the input unit is operable by a user to set information related to a shape, model information based on the information related to the shape set by the user using the input screen is displayable by the output unit;
controlling the input and output apparatus to present, to the user, information related to a shape which the user is allowed to set; and
generating the model data based on the information related to the shape set by the user,
the information related to the shape which the user is allowed to set is presented based on at least one of a condition related to a build apparatus configured to additively build the object and a condition related to a build object built based on the information related to the shape.

18. The data generation method according to claim 16 or 17, wherein
the information related to the shape includes a parameter related to a shape of the object to be additively built by the build apparatus.

19. A data generation method of generating model data representing a three-dimensional model of a pipe that is an object additively built by a build apparatus, wherein
the data generation method comprises:
displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and
generating the model data based on the value of the parameter set by the user,
when the user sets the value of the parameter defining a shape of a second cross-section of the pipe after setting the value of the parameter defining a shape of a first cross-section of the pipe, the output screen updates a display of the three-dimensional model related to at least a pipe shape between the first cross-section and the second cross-section.

20. A data generation method of generating model data representing a three-dimensional model of a pipe that is an object additively built by a build apparatus, wherein
the data generation method comprises:
displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and
generating the model data based on the icon selected by the user,
when the user sets the icon defining a shape of a second cross-section of the pipe after setting the icon defining a shape of a first cross-section of the pipe, the output screen updates a display of the three-dimensional model related to at least a pipe shape between the first cross-section and the second cross-section.

21. A data generation method of generating model data representing a three-dimensional model of an obj ect, wherein
the data generation method comprises:
displaying a display screen on a display apparatus, the display screen includes an input screen and an output screen, the input screen is used by a user to select an icon defining a shape of the object, a three-dimensional model based on the icon selected by the user using the input screen is displayable on the output screen; and
generating the model data based on the icon selected by the user,
the user is allowed to select a plurality of icons.

22. The data generation method according to any one of claims 1, 4 to 13, and 18 to 19, wherein
the value of the parameter which the user is allowed to set is the value of the parameter defining the shape that can be built by a built apparatus configured to build the object.

23. The data generation method according to any one of claims 1, 4 to 13, 18 to 19 and 22, wherein
the user is not allowed to set the value of the parameter defining the shape that cannot be built by a built apparatus configured to build the object.

24. The data generation method according to any one of claims 1, 4 to 13, 18 to 19 and 22 to 23, wherein
the value of the parameter which the user is allowed to set is the value of the parameter defining the shape by which a strength of the object satisfies a predetermined condition.

25. The data generation method according to any one of claims 1, 4 to 13, 18 to 19 and 22 to 24, wherein
the user is not allowed to set the value of the parameter defining the shape by which a strength of the object does not satisfy a predetermined condition.

26. The data generation method according to any one of claims 1, 4 to 13, 18 to 19 and 22 to 25, wherein
the value of the parameter which the user is allowed to set is the value of the parameter defining the shape by which a quality of the object satisfies a predetermined condition.

27. The data generation method according to any one of claims 1, 4 to 13, 18 to 19 and 22 to 26, wherein
the user is not allowed to set the value of the parameter defining the shape by which a quality of the object does not satisfy a predetermined condition.

28. The data generation method according to any one of claims 2 to 3, 14 to 15 and 20 to 21, wherein
the icon which the user is allowed to select is the icon defining the shape that can be built by a built apparatus configured to build the object.

29. The data generation method according to any one of claims 2 to 3, 14 to 15, 20 to 21 and 28, wherein
the user is not allowed to set the icon defining the shape that cannot be built by a built apparatus configured to build the object.

30. The data generation method according to any one of claims 2 to 3, 14 to 15, 20 to 21 and 28 to 29, wherein
the icon which the user is allowed to select is the icon defining the shape by which a strength of the object satisfies a predetermined condition.

31. The data generation method according to any one of claims 2 to 3, 14 to 15, 20 to 21 and 28 to 30, wherein
the user is not allowed to set the icon defining the shape by which a strength of the object does not satisfy a predetermined condition.

32. The data generation method according to any one of claims 2 to 3, 14 to 15, 20 to 21 and 28 to 31, wherein
the icon which the user is allowed to select is the icon defining the shape by which a quality of the object satisfies a predetermined condition.

33. The data generation method according to any one of claims 2 to 3, 14 to 15, 20 to 21, and 28 to 32, wherein
the user is not allowed to set the icon defining the shape by which a quality of the object does not satisfy a predetermined condition.

34. The data generation method according to any one of claims 1, 4 to 13, 18 to 19 and 22 to 27, wherein
the input screen includes a display object for presenting at least one of a candidate and range of the value of the parameter which the user is allowed to set, to the user in such a manner that it is allowed to be set.

35. The data generation method according to any one of claims 1, 4 to 13, 18 to 19, 22 to 27 and 34, wherein
the input screen includes a display object for presenting at least one of a candidate and range of the value of the parameter which the user is not allowed to set, to the user in such a manner that it is not allowed to be set.

36. The data generation method according to any one of claims 2 to 3, 14 to 15, 20 to 21 and 28 to 33, wherein
the input screen includes a display object for presenting the icon which the user is allowed to select, to the user in such a manner that it is allowed to be selected.

37. The data generation method according to any one of claims 2 to 3, 14 to 15, 20 to 21, 28 to 33 and 36, wherein
the input screen includes a display object for presenting the icon which the user is not allowed to select, to the user in such a manner that it is not allowed to be selected.

38. The data generation method according to any one of claims 1, 4 to 13, 18 to 19, 22 to 27 and 34 to 35, wherein
the parameter defines at least one of a position of at least a part of the object, a size of at least a part of the object, a shape of at least a part of the object, and a direction of at least a part of the obj ect.

39. The data generation method according to any one of claims 2 to 3, 14 to 15, 20 to 21, 28 to 33 and 36 to 37, wherein
the icon defines a shape of at least a part of the object.

40. The data generation method according to any one of claims 1, 4 to 13, 18 to 19, 22 to 27, 34 to 35 and 38, wherein
the parameter defines at least one of a shape and size of an extending part that extends from a first part to second part of the object.

41. The data generation method according to any one of claims 1, 4 to 13, 18 to 19, 22 to 27, 34 to 35, 38 and 40, wherein
the parameter defines at least one of a shape and size of a base part that is a base of the obj ect.

42. The data generation method according to any one of claims 2 to 3, 14 to 15, 20 to 21, 28 to 33, 36 to 37 and 39, wherein
the icon defines a shape a base part that is a base of the object.

43. The data generation method according to any one of claims 1 to 42, wherein
the input screen is operable by the user to set roughness of a surface of at least a part of the object.

44. The data generation method according to any one of claims 1 to 43, wherein
the input screen is operable by the user to set a material of the object.

45. The data generation method according to any one of claims 1 to 44, wherein
the input screen is operable by the user to set at least one of materials of the object and a mixing ratio of the materials.

46. The data generation method according to any one of claims 2 to 3, 6 to 8 and 19 to 20, wherein
the input screen is operable by the user to set at least one of a direction along which a pipe conduit of at least a part of the pipe extends, a presence or absence of a branch of at least a part of the pipe, and a presence or absence of a merge of a pipe conduit of at least a part of the pipe.

47. The data generation method according to any one of claims 1 to 46, wherein
the build apparatus performs an additive building based on a Laser Metal Deposition (LMD).

48. A build contract method of contracting to additively build an object, wherein
the build contract method comprises:
displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen;
displaying, on the display apparatus, a display screen for prompting the user to set the value of the parameter again, when the three-dimensional model based on the value of the parameter set by the user using the input screen has a shape that cannot be built by the build apparatus; and
additively building the object based on the value of the parameter set by the user again.

49. A build contract method of contracting to additively build a pipe, wherein
the build contract method comprises:
displaying a display screen on a display apparatus, the display screen includes an input screen and an output screen, the input screen is used by a user to select an icon defining a shape of the pipe, a three-dimensional model based on the icon selected by the user using the input screen is displayable on the output screen,
the user is allowed to select icons related to a plurality of cross-sections of the pipe.

50. A build contract method of contracting to additively build an object, wherein
the build contract method comprises:
displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; and
displaying, on the display apparatus, a display screen for prompting the user to set the value of the parameter again, when a strength of the object based on the shape of the object represented by the value of the parameter set by the user does not satisfy a predetermined condition.

51. A build contract method of contracting to additively build an object, wherein
the build contract method comprises:
displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen; and
displaying, on the display apparatus, a display screen for prompting the user to set the value of the parameter again, when a quality of the object based on the shape of the object represented by the value of the parameter set by the user does not satisfy a predetermined condition.

52. A build contract method of contracting to additively build a pipe, wherein
the build contract method comprises:
displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen,
the user is allowed to set the values of the parameters related to a plurality of cross-sections of the pipe.

53. A build contract method of contracting to additively build plate, wherein
the build contract method comprises:
displaying a display screen on a display apparatus, the display screen includes an input screen and an output screen, the input screen is operable by a user to set a value of a parameter defining a shape of the plate, a three-dimensional model based on the value of the parameter set by the user using the input screen is displayable on the output screen,
the user is allowed to set the values of the parameters for a plurality of points of the plate.

54. A build contract method of contracting to additively build a plate, wherein
the build contract method comprises:
displaying a display screen on a display apparatus, the display screen includes an input screen and an output screen, the input screen is used by a user to select an icon defining a shape of the plate, a three-dimensional model based on the icon selected by the user using the input screen is displayable on the output screen,
the user is allowed to select icons for a plurality of points of the plate.

55. A build contract method of contracting to additively build an object, wherein
the build contract method comprises:
controlling an input and output apparatus, the input and output apparatus includes an input unit and an output unit, the input unit is operable by a user to set information related to a shape, model information based on the information related to the shape set by the user using the input unit is displayable by the output unit; and
controlling the input and output apparatus to perform a process for prompting the user to set the information related to the shape again, when the information related to the shape set by the user does not satisfy a predetermined condition,
the predetermined condition includes at least one of a condition related to a build apparatus configured to additively build the object and a condition related to a build object built based on the information related to the shape.

56. A build contract method of contracting to additively build an object, wherein
the build contract method comprises:
controlling an input and output apparatus, the input and output apparatus includes an input unit and an output unit, the input unit is operable by a user to set information related to a shape, model information based on the information related to the shape set by the user using the input screen is displayable by the output unit; and
controlling the input and output apparatus to present, to the user, information related to a shape which the user is allowed to set,
the information related to the shape which the user is allowed to set is presented based on at least one of a condition related to a build apparatus configured to additively build the object and a condition related to a build object built based on the information related to the shape.

57. A build contract method of contracting to additively build a pipe, wherein
the build contract method comprises:
displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen,
when the user sets the value of the parameter defining a shape of a second cross-section of the pipe after setting the value of the parameter defining a shape of a first cross-section of the pipe, the output screen updates a display of the three-dimensional model related to at least a pipe shape between the first cross-section and the second cross-section.

58. A build contract method of contracting to additively build a pipe, wherein
the build contract method comprises:
displaying a display screen on a display apparatus, the display screen includes an input screen and an output screen, the input screen is used by a user to select an icon defining a shape of the pipe, a three-dimensional model based on the icon selected by the user using the input screen is displayable on the output screen,
when the user sets the icon defining a shape of a second cross-section of the pipe after setting the icon defining a shape of a first cross-section of the pipe, the output screen updates a display of the three-dimensional model related to at least a pipe shape between the first cross-section and the second cross-section.

59. A build contract method of contracting to additively build an object, wherein
the build contract method comprises:
displaying a display screen on a display apparatus, the display screen includes an input screen and an output screen, the input screen is used by a user to select an icon defining a shape of the object, a three-dimensional model based on the icon selected by the user using the input screen is displayable on the output screen,
the user is allowed to select a plurality of icons.

60. A build contract method of contracting to additively build an object, wherein
the build contract method comprises:
generating display information for displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen;
generating display information for displaying, on the display apparatus, a display screen for prompting the user to set the value of the parameter again, when the three-dimensional model based on the value of the parameter set by the user using the input screen has a shape that cannot be built by the build apparatus; and
generating model data representing a three-dimensional model of the object based on the value of the parameter set by the user again.

61. A build contract method of contracting to additively build a pipe, wherein
the build contract method comprises:
generating display information for displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and
generating model data representing a three-dimensional model of the pipe based on the icon selected by the user,
the user is allowed to select icons related to a plurality of cross-sections of the pipe.

62. A build contract method of contracting to additively build an object, wherein
the build contract method comprises:
generating display information for displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen;
generating display information for displaying, on the display apparatus, a display screen for prompting the user to set the value of the parameter again, when a strength of the obj ect based on the shape of the object represented by the value of the parameter set by the user does not satisfy a predetermined condition; and
generating model data representing a three-dimensional model of the object based on the value of the parameter set by the user again.

63. A build contract method of contracting to additively build an object, wherein
the build contract method comprises:
generating display information for displaying a display screen on a display apparatus, the display screen includes an input screen and an output screen, the input screen is operable by a user to set a value of a parameter defining a shape of the object, a three-dimensional model based on the value of the parameter set by the user using the input screen is displayable on the output screen;
generating display information for displaying, on the display apparatus, a display screen for prompting the user to set the value of the parameter again, when a quality of the object based on the shape of the object represented by the value of the parameter set by the user does not satisfy a predetermined condition; and
generating model data representing a three-dimensional model of the object based on the value of the parameter set by the user again.

64. A build contract method of contracting to additively build a pipe, wherein
the build contract method comprises:
generating display information for displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and
generating model data representing a three-dimensional model of the pipe based on the value of the parameter selected by the user,
the user is allowed to set the values of the parameters related to a plurality of cross-sections of the pipe.

65. A build contract method of contracting to additively build a plate, wherein
the build contract method comprises:
generating display information for displaying a display screen on a display apparatus, the display screen includes an input screen and an output screen, the input screen is operable by a user to set a value of a parameter defining a shape of the plate, a three-dimensional model based on the value of the parameter set by the user using the input screen is displayable on the output screen; and
generating model data representing a three-dimensional model of the plate based on the value of the parameter selected by the user,
the user is allowed to set the values of the parameters for a plurality of points of the plate.

66. A build contract method of contracting to additively build a plate, wherein
the build contract method comprises:
generating display information for displaying a display screen on a display apparatus, the display screen includes an input screen and an output screen, the input screen is used by a user to select an icon defining a shape of the plate, a three-dimensional model based on the icon selected by the user using the input screen is displayable on the output screen; and
generating model data representing a three-dimensional model of the plate based on the icon selected by the user,
the user is allowed to select icons for a plurality of points of the plate.

67. A build contract method of contracting to additively build a pipe, wherein
the build contract method comprises:
generating display information for displaying a display screen on a display apparatus, the display screen includes an input screen and an output screen, the input screen is operable by a user to set a value of a parameter defining a shape of the pipe, a three-dimensional model based on the value of the parameter set by the user using the input screen is displayable on the output screen; and
generating a display information for displaying, on the output screen, a three-dimensional model related to at least a pipe shape between a first cross-section and a second cross-section based on the value of the parameter defining a shape of the first cross-section of the pipe and the value of the parameter defining a shape of the second cross-section of the pipe which are set by the user.

68. A build contract method of contracting to additively build a pipe, wherein
the build contract method comprises:
generating display information for displaying a display screen on a display apparatus, the display screen includes an input screen and an output screen, the input screen is used by a user to select an icon defining a shape of the pipe, a three-dimensional model based on the icon selected by the user using the input screen is displayable on the output screen; and
generating a display information for displaying, on the output screen, a three-dimensional model related to at least a pipe shape between a first cross-section and a second cross-section based on the icon defining a shape of the first cross-section of the pipe and the icon defining a shape of the second cross-section of the pipe which are selected by the user.

69. A data generation apparatus configured to generate model data representing a three-dimensional model of an object that is additively built by a build apparatus, wherein
the data generation apparatus is configured to:
generate a display screen, the display screen includes an input screen and an output screen, the input screen is operable by a user to set a value of a parameter defining a shape of the object, a three-dimensional model based on the value of the parameter set by the user using the input screen is displayable on the output screen;
perform a process for prompting the user to set the value of the parameter again, when the three-dimensional model based on the value of the parameter set by the user using the input screen has a shape that cannot be built by the build apparatus; and
generate the model data based on the value of the parameter set by the user again.

70. A data generation apparatus configured to generate model data representing a three-dimensional model of a pipe that is an object additively built by a build apparatus, wherein
the data generation apparatus is configured to:
generate a display screen, the display screen includes an input screen and an output screen, the input screen is used by a user to select an icon defining a shape of the pipe, a three-dimensional model based on the icon selected by the user using the input screen is displayable on the output screen; and
generate the model data based on the icon selected by the user,
the user is allowed to select icons related to a plurality of cross-sections of the pipe.

71. A data generation apparatus configured to generate model data representing a three-dimensional model of an object that is additively built by a build apparatus, wherein
the data generation apparatus is configured to:
generate a display screen, the display screen includes an input screen and an output screen, the input screen is operable by a user to set a value of a parameter defining a shape of the object, a three-dimensional model based on the value of the parameter set by the user using the input screen is displayable on the output screen;
perform a process for prompting the user to set the value of the parameter again, when a strength of the object based on the shape of the object represented by the value of the parameter set by the user does not satisfy a predetermined condition; and
generate the model data based on the value of the parameter set by the user again.

72. A data generation apparatus configured to generate model data representing a three-dimensional model of an object that is additively built by a build apparatus, wherein
the data generation apparatus is configured to:
generate a display screen, the display screen includes an input screen and an output screen, the input screen is operable by a user to set a value of a parameter defining a shape of the object, a three-dimensional model based on the value of the parameter set by the user using the input screen is displayable on the output screen;
perform a process for prompting the user to set the value of the parameter again, when a quality of the object based on the shape of the object represented by the value of the parameter set by the user does not satisfy a predetermined condition; and
generate the model data based on the value of the parameter set by the user again.

73. A data generation apparatus configured to generate model data representing a three-dimensional model of a pipe that is an object additively built by a build apparatus, wherein
the data generation apparatus is configured to:
generate a display screen, the display screen includes an input screen and an output screen, the input screen is operable by a user to set a value of a parameter defining a shape of the pipe, a three-dimensional model based on the value of the parameter set by the user using the input screen is displayable on the output screen; and
generate the model data based on the value of the parameter set by the user,
the user is allowed to set the values of the parameters related to a plurality of cross-sections of the pipe.

74. A data generation apparatus configured to generate model data representing a three-dimensional model of a plate that is an object additively built by a build apparatus, wherein
the data generation apparatus is configured to:
generate a display screen, the display screen includes an input screen and an output screen, the input screen is operable by a user to set a value of a parameter defining a shape of the plate, a three-dimensional model based on the value of the parameter set by the user using the input screen is displayable on the output screen; and
generate the model data based on the value of the parameter set by the user,
the user is allowed to set the values of the parameters for a plurality of points of the plate.

75. A data generation apparatus configured to generate model data representing a three-dimensional model of a plate that is an object additively built by a build apparatus, wherein
the data generation apparatus is configured to:
generate a display screen, the display screen includes an input screen and an output screen, the input screen is used by a user to select an icon defining a shape of the plate, a three-dimensional model based on the icon selected by the user using the input screen is displayable on the output screen; and
generate the model data based on the icon selected by the user,
the user is allowed to select icons for a plurality of points of the plate.

76. A data generation apparatus configured to generate model data representing a three-dimensional model of an object, wherein
the data generation apparatus is configured to:
control an input and output apparatus, the input and output apparatus includes an input unit and an output unit, the input unit is operable by a user to set information related to a shape, model information based on the information related to the shape set by the user using the input unit is displayable by the output unit;
control the input and output apparatus to perform a process for prompting the user to set the information related to the shape again, when the information related to the shape set by the user does not satisfy a predetermined condition; and
generate the model data based on the information related to the shape set by the user again,
the predetermined condition includes at least one of a condition related to a build apparatus configured to additively build the object and a condition related to a build object built based on the information related to the shape.

77. A data generation apparatus configured to generate model data representing a three-dimensional model of an object, wherein
the data generation apparatus is configured to:
control an input and output apparatus, the input and output apparatus includes an input unit and an output unit, the input unit is operable by a user to set information related to a shape, model information based on the information related to the shape set by the user using the input screen is displayable by the output unit;
control the input and output apparatus to present, to the user, information related to a shape which the user is allowed to set; and
generate the model data based on the information related to the shape set by the user,
the information related to the shape which the user is allowed to set is presented based on at least one of a condition related to a build apparatus configured to additively build the object and a condition related to a build object built based on the information related to the shape.

78. A data generation apparatus configured to generate model data representing a three-dimensional model of a pipe that is an object additively built by a build apparatus, wherein
the data generation apparatus is configured to:
generate a display screen, the display screen includes an input screen and an output screen, the input screen is operable by a user to set a value of a parameter defining a shape of the pipe, a three-dimensional model based on the value of the parameter set by the user using the input screen is displayable on the output screen; and
generate the model data based on the value of the parameter set by the user,
when the user sets the value of the parameter defining a shape of a second cross-section of the pipe after setting the value of the parameter defining a shape of a first cross-section of the pipe, the output screen updates a display of the three-dimensional model related to at least a pipe shape between the first cross-section and the second cross-section.

79. A data generation apparatus configured to generate model data representing a three-dimensional model of a pipe that is an object additively built by a build apparatus, wherein
the data generation apparatus is configured to:
generate a display screen, the display screen includes an input screen and an output screen, the input screen is used by a user to select an icon defining a shape of the pipe, a three-dimensional model based on the icon selected by the user using the input screen is displayable on the output screen; and
generate the model data based on the icon selected by the user,
when the user sets the icon defining a shape of a second cross-section of the pipe after setting the icon defining a shape of a first cross-section of the pipe, the output screen updates a display of the three-dimensional model related to at least a pipe shape between the first cross-section and the second cross-section.

80. A data generation apparatus configured to generate model data representing a three-dimensional model of an object, wherein
the data generation apparatus is configured to:
generate a display screen, the display screen includes an input screen and an output screen, the input screen is used by a user to select an icon defining a shape of the object, a three-dimensional model based on the icon selected by the user using the input screen is displayable on the output screen; and
generate the model data based on the icon selected by the user,
the user is allowed to select a plurality of icons.

81. A display apparatus comprising:
an obtaining unit configured to obtain information related to the display screen from the data generation apparatus according to any one of claims 69 to 75 and 78 to 80; and
display unit configured to display the display screen based on the information obtained by the obtaining unit.

82. A display apparatus comprising:
an obtaining unit configured to obtain information related to the input unit and the output unit from the data generation apparatus according to claim 76 or 77; and
display unit configured to display the display screen based on the information obtained by the obtaining unit.

83. A build method of building an object, wherein
the build method comprises:
generating the model data by using the data generation method according to any one of claims 1 to 47; and
controlling a build apparatus to build the object based on the model data.

84. A build method of building an object, wherein
the build method comprises:
generating the model data by using the data generation apparatus according to any one of claims 69 to 80; and
controlling a build apparatus to build the object based on the model data.

85. The build method according to claim 83 or 84, wherein
controlling the build apparatus includes:
generating, based on the model data, control data for controlling the build apparatus to build the object; and
controlling the build apparatus based on the control data.

86. A computer program that allows a computer to execute the data generation method according to any one of claims 1 to 47.

87. A computer program that allows a computer to execute the build contract method according to any one of claims 48 to 68.

88. A computer program that allows a computer to execute the build method according to any one of claims 83 to 85.

89. A recording medium on which the computer program according to any one of claims 86 to 88 is recorded.
